# EUROPÄISCHE PATENTANMELDUNG

(11) **EP 4 167 583 A2**
(43) Veröffentlichungstag der Anmeldung: **19.04.2023**
(21) Anmeldenummer: 22201732.9
(22) Anmeldetag: 14.10.2022
(51) Int. Cl.: H04N 21/472, G06Q 10/10, G06Q 50/18

(54) **VERFAHREN UND VORRICHTUNG ZUR VISUELLEN INFORMATIONSAUSGABE**

(30) Priorität: 14.10.2021 DE 102021126613; 31.01.2022 DE 102022102212
(71) Anmelder: COCOSOFT Systems GmbH, 13581 Berlin (DE)
(72) Erfinder: HESTERBERG, Jan Christian, 13503 Berlin (DE)
(74) Vertreter: Dantz, Dirk

(57) **Zusammenfassung**

Die Erfindung betrifft ein Verfahren zum Wechseln von unterschiedlichen Sätzen von Medieninhalten zur Ausgabe der Medieninhalte auf einer Ausgabe-Einrichtung eines Gerichtssaal-Mediensystems mit den Verfahrensschritten Bereitstellen von zwei oder mehr Sätzen von Medieninhalten zur Ausgabe aus einem Mediaplayer und Ausführen eines Steuerprogramms auf einer an den Mediaplayer gekoppelten Steuereinheit zur Steuerung der Ausgabe von Medieninhalten aus dem Mediaplayer auf der Ausgabe-Einrichtung sowie Ausgeben) des ersten Satzes von Medieninhalten, wobei das Steuerprogramm automatisch die Ausgabe der ausgegebenen Medieninhalte verändert.

## Beschreibung

Die Erfindung betriff ein Verfahren zum Wechseln von unterschiedlichen Sätzen von Medieninhalten zur Ausgabe der Medieninhalte auf einer Ausgabe-Einrichtung eines Gerichtssaal-Mediensystems mit den Verfahrensschritten Bereitstellen von zwei oder mehr Sätzen von Medieninhalten zur Ausgabe aus einem Mediaplayer und Ausführen eines Steuerprogramms auf einer an den Mediaplayer gekoppelten Steuereinheit zur Steuerung der Ausgabe von Medieninhalten aus dem Mediaplayer auf der Ausgabe-Einrichtung sowie Ausgeben) des ersten Satzes von Medieninhalten, wobei das Steuerprogramm automatisch die Ausgabe der ausgegebenen Medieninhalte verändert.

### Stand der Technik

Unter der Verwendung von CPU und GPU des Computers, auf dem sie installiert ist, spielt die Software Mediendateien ab. Unterschiedliche Media Player unterstützen dabei unterschiedliche Medientypen. Durch so genannte Codecs werden digitale Dateien wie Bilder, Videos, Webseiten und IPTV Screens dekodiert und visuell sichtbar auf den Bildschirm gebracht. IPTV bringt TV-Inhalte über das Internet direkt auf Displays.

Moderne Software speichert die Mediendateien für eine lückenlose Übertragung auf einem internen Speicher. Im Gegensatz zu einer Streaming-Lösung kann das Bild auch bei einem Abbruch der Internetverbindung weiter übertragen werden. Noch weiter fortgeschrittene Software beinhaltet zum Beispiel noch folgende Features: Reporting für jedes abgespielte Medium durch einen "Proof of Play" (API zeichnet Betrieb auf); Reporting für den aktuellen Player-Status (CPU-Usage, Content-Version, etc.); Die Möglichkeit die aktuelle Playlist (für Notfallmeldungen oder mobile Interaktion) zu unterbrechen; Die Möglichkeit Inhalte über mehrere Media Player für spektakuläre Bilder zu synchronisieren.

Der Trend innerhalb der Digital Signage Industrie bewegt sich weg von Enterprise Lösungen auf Windows PC, die den Markt lange Zeit dominiert haben, hin zu kleineren und weniger teuren Lösungen. Es gibt dabei zwei sehr bestimmende non-PC Trends, die bessere Produkte zu günstigeren Preisen hervorbringen: Zum einen Software basierend auf Linux, Android sowie Chrome und zum anderen so genannte "System on Chip (SoC) Displays", die nicht mehr auf einen externen Media Player angewiesen sind.

Die meisten Softwareanbieter in der Digital Signage Industrie bezeichnen sich selbst als Content Management System (CMS). Ein CMS bietet dem Nutzer typischerweise ein User Interface (UI), über das Inhalte im ersten Schritt hochgeladen und organisiert werden können. Im zweiten Schritt kann eine Playlist und bestimmte Regeln für das Abspielen der Playlist erstellt werden. Im letzten Schritt werden die Inhalte an den oder die angeschlossenen Media Player übertragen. Der Media Player spielt dann autonom die Playlist nach den vorgegebenen Regeln ab. Soll eine andere Playlist abgespielt werden, so werden muss diese wiederum über das CMS erstellt werden und anstelle der ersten Liste auf den angeschlossenen Media Player übertragen werden. Dies hat den Nachteil, dass bei veränderten Inhalten immer wieder händisch eingegriffen werden muss um die auszugebenen Medieninhalte zu verändern. Sollen dennoch parallel unterschiedliche Medieninhalte unabhängig voneinander abspielbar sein, so ist der Einsatz zweier parallel geschalteter Media Player notwendig, was zu sehr hohen Kosten führen kann.

Insbesondere in einem Gericht gibt es eine Vielzahl von Kammern, die alle auf unterschiedliche den jeweiligen Kammern zugeordnete Medieninhalte zurückgreifen, um diese zur Anzeige zu bringen. Diese Vielzahl von unterschiedlichen Kammern nutzen aber die gleichen Gerichtssäle und greifen daher auf die gleichen Hard- und überwiegend die gleichen Softwareressourcen zurück.

Es ist daher Aufgabe der vorliegenden Erfindung ein Verfahren bereitzustellen, das insbesondere im Hinblick auf die Anwendungen in Gerichten mit einer Vielzahl von Kammern kostengünstig und einfach der Funktionsumfang der bisherigen Verfahren erweitert. Es ist ebenfalls eine Aufgabe der Erfindung, ein Gerichtssaal-Mediensystem bereitzustellen, mit dem insbesondere im Hinblick auf die Anwendungen in Gerichten mit einer Vielzahl von Kammern kostengünstig und einfach der Funktionsumfang erweitert wird.

Die Aufgabe wird mittels des Verfahrens zum Wechseln von unterschiedlichen Sätzen von Medieninhalten zur Ausgabe der Medieninhalte auf einer Ausgabeeinrichtung eines Gerichtssaal-Mediensystems gemäß Anspruch 1 gelöst. Vorteilhafte Ausführungen der Erfindung sind in den Unteransprüchen dargelegt.

Das erfindungsgemäße Verfahren zum Wechseln von unterschiedlichen Sätzen von Medieninhalten zur Ausgabe der Medieninhalte auf einer Ausgabeeinrichtung eines Gerichtssaal-Mediensystems weist drei Verfahrensschritte auf: Im ersten Verfahrensschritt werden zwei oder mehr Sätze von Medieninhalten zur Ausgabe aus einem Mediaplayer bereitgestellt. Die Sätze von Medieninhalten können insbesondere Bild- und/oder Toninhalte aufweisen. Die Bild- und/oder Toninhalte können z.B. Aufnahmen von Zeugenaussagen, Beweisdokumente und/oder Film- oder Tonaufnahmen sein. Die Sätze von Medieninhalten werden bevorzugt von externen Quellen bereitgestellt, die nicht oder nur temporär im Gerichtssaal-Mediensystem angeordnet sind bzw. Teil des Gerichtssaal-Mediensystems sind.

Im zweiten Verfahrensschritt wird ein Steuerprogramm auf einer an den Mediaplayer gekoppelten Steuereinheit zur Steuerung der Ausgabe von Medieninhalten aus dem Mediaplayer auf der Ausgabeeinrichtung ausgeführt.

Im dritten Verfahrensschritt wird ein erster Satz von Medieninhalten ausgegeben. Die Ausgabe erfolgt mittels einer Ausgabe-Einrichtung, die Bild- und/oder Toninhalte ausgeben kann oder mit Einrichtungen zur Ausgabe von Bild- und/oder Toninhalten verbunden ist. Erfindungsgemäß verändert das Steuerprogramm automatisch die Ausgabe der ausgegebenen Medieninhalte. Insbesondere wird die Ausgabe der ausgegebenen Medieninhalte derart verändert, dass zu einem ersten Zeitpunkt ein erster Satz von Medieninhalten ausgegeben wird, zu einem zweiten Zeitpunkt wird ein zweiter Satz von Medieninhalten ausgegeben.

Das Steuerprogramm kann die Ausgabe der ausgegebenen Medieninhalte auch derart verändern, dass auf einer Mehrzahl von Ausgabe-Einrichtungen gleichzeitig eine Mehrzahl von Sätzen von Medieninhalten ausgegeben werden, z.B. wird auf einer ersten Ausgabe-Einrichtung ein erster Satz von Medieninhalten ausgeben, gleichzeitig wird auf einer zweiten Ausgabe-Einrichtung ein zweiter Satz von Medieninhalten ausgegeben.

Mittels des erfindungsgemäßen Verfahrens ist es daher möglich, zwei oder mehr Sätze von Medieninhalten mittels nur eines Mediaplayers automatisch auszugeben. Außerdem können unter Nutzung nur eines Gerichtssaal-Mediensystems mit einer Hard- und Softwarekonfiguration und -ausstattung individuell angepasste Sätze von Medieninhalten auszugeben.

Ein Mediaplayer im Sinne dieser Erfindung ist ein non-PC in Form einer Software basierend auf Linux, Android sowie Chrome, so genannte "System on Chip (SoC) Displays", die nicht mehr auf einen externen Media Player angewiesen sind und/oder externe Media-Player, als separate Komponenten in Mini-PC-Form, mit denen die jeweilige Anzeige gesteuert werden kann.

Das Gerichtssaal-Mediensystem kann so optional als geschlossenes System betrieben werden, sodass während einer Gerichtsverhandlung kein Zugriff von Extern beispielsweise durch Dritte möglich ist. Der Richter hat somit die volle Kontrolle über alle Geschehnisse des Gerichtssaalmediensystems eine externe Verbindung zur Einspielung von Bildinhalten ist nicht nötig.. In einer optionalen Ausgestaltung der Erfindung sind alle Elemente zur Steuerung des Gerichtssaal-Mediensystems im Gerichtssaal angeordnet. In einer weiteren optionalen Ausführungsform ist die Steuerung des Gerichtssaalmediensystems während einer Gerichtsverhandlung auf im Gerichtssaal befindliche Steuerungselemente, wie beispielsweise das Control-Panel, begrenzt.

Gerichtssaal-Mediensysteme unterliegen hierbei besonderen Anforderungen. Zum einem muss gewährleistet sein, dass Gerichtssaal-Mediensysteme nicht von außen durch Dritte korrumpiert werden können. Hierfür ist es in einer optionalen Ausgestaltung der Erfindung vorgesehen, dass das Gerichtssaal-Mediensystem als geschlossenes System betrieben wird. In einer besonders bevorzugten Ausführungsform wird das Gerichtssaal-Mediensystem während eines Gerichtsverfahrens als geschlossenes System betrieben. Zum anderen muss das Gerichtssaal-Mediensystem darauf ausgelegt ein, dass den Verfahrensbeteiligten ihr beispielsweise im deutschen Grundgesetz verankertes Recht auf rechtliches Gehör gewährleistet werden kann - allerdings nur insoweit, wie dies der Vorsitzende Richter zulässt, damit beispielsweise die Gerichtsverhandlung selbst nicht als Podium missbraucht werden kann. Andernfalls könnte dem Gericht selbst Verfahrensfehler angelastet werden, oder nicht genehmigte Inhalte eingebracht und dargestellt werden.

In einer weiteren optionalen Ausgestaltung der Erfindung ist das Control-Panel ausschließlich aus dem Gerichtssaal heraus steuerbar. Dadurch besteht die Möglichkeit das Gerichtssaal-Mediensystem als geschlossenes System zu betreiben, sodass während einer Gerichtsverhandlung kein Zugriff von Extern beispielsweise durch Dritte möglich ist. Der Richter hat somit die volle Kontrolle über alle Geschehnisse des Gerichtssaalmediensystems. In einer optionalen Ausgestaltung der Erfindung sind alle Elemente zur Steuerung des Gerichtssaal-Mediensystems im Gerichtssaal angeordnet. In einer weiteren optionalen Ausführungsform ist die Steuerung des Gerichtssaalmediensystems während einer Gerichtsverhandlung auf im Gerichtssaal befindliche Steuerungselemente, wie beispielsweise das Control-Panel, begrenzt.

In einer Weiterbildung der Erfindung werden die zwei oder mehr Sätze von Medieninhalten auf den Mediaplayer übertragen. Die Sätze von Medieninhalten werden von der die Sätze von Medieninhalten bereitstellenden Quelle auf den Mediaplayer übertragen und in einem Speicher des Mediaplayers gespeichert. Die die Sätze von Medieninhalten bereitstellende Quelle kann daher nach der Übertragung der Sätze von Medieninhalten wieder von dem Mediaplayer getrennt werden. Die die Sätze von Medieninhalten bereitstellende Quelle kann daher auch eine externe Quelle sein, die nur temporär mit dem Mediaplayer verbunden ist.

In einer weiteren Ausführung der Erfindung werden zwei oder mehr Sätze von Medieninhalten parallel in einem Speicher des Mediaplayers gespeichert. Der Speicher des Mediaplayers weist also zu einem Zeitpunkt zwei oder mehr gespeicherte Sätze von Medieninhalten auf, die gleichzeitig oder unabhängig voneinander ausgegeben werden können. Zur Ausführung des erfindungsgemäßen Verfahrens ist daher nur ein Mediaplayer notwendig, die Kosten für die Hardware des Gerichtssaal-Mediensystems sind daher reduziert.

In einer weiteren Gestaltung der Erfindung wird nur ein Teil der auf dem Mediaplayer gespeicherten Sätze von Medieninhalten auf der Ausgabeeinrichtung ausgegeben. Die gespeicherten Sätze von Medieninhalten können die gleichzeitig oder unabhängig voneinander ausgegeben werden, insbesondere zeitlich versetzt. Möglich ist auch, dass auf einer Mehrzahl von Ausgabe-Einrichtungen gleichzeitig eine Mehrzahl von Sätzen von Medieninhalten ausgegeben werden, z.B. wird auf einer ersten Ausgabe-Einrichtung ein erster Satz von Medieninhalten ausgeben, gleichzeitig wird auf einer zweiten Ausgabe-Einrichtung ein zweiter Satz von Medieninhalten ausgegeben.

In einem weiteren Aspekt der Erfindung wird der auf der Ausgabe-Einrichtung ausgegebene Satz von Medieninhalten aus dem Speicher des Mediaplayers ausgelesen. Der auf der Ausgabe-Einrichtung ausgegebene Satz von Medieninhalten wird nicht z.B, an eine Ausgabe-Einrichtung gesendet, sondern verbleibt im Speicher des Mediaplayers.

In einer weiteren Ausgestaltung der Erfindung wird in der Steuereinheit ein Signal empfangen, das zu einer Veränderung der Auswahl der auszugebenden Sätze von Medieninhalten führt. Das Signal zu Veränderung der Auswahl der auszugebenden Sätze von Medieninhalten kann automatisch, z.B. durch ein Zeitsignal, oder durch manuelle Eingabe erzeugt werden.

In einer Weiterbildung der Erfindung wertet das Steuerprogramm das empfangene Signal aus. Das Steuerprogramm wertet das empfangene Signal insbesondere dahingehend aus, welcher der auf dem Mediaplayer gespeicherten Sätze von Medieninhalten zu welchem Zeitpunkt auf welcher Ausgabe-Einrichtung ausgegeben werden soll.

In einer weiteren Ausbildung der Erfindung generiert die Steuereinheit ein Signal zur Veränderung der Auswahl der aus dem Mediaplayer auszugebenden Sätze von Medieninhalten. Das Signal beinhaltet insbesondere Anweisungen, welcher der auf dem Mediaplayer gespeicherten Sätze von Medieninhalten zu welchem Zeitpunkt auf welcher Ausgabe-Einrichtung ausgegeben werden soll.

In einer weiteren Ausführung der Erfindung wird das durch die Steuereinheit generierte Signal zur Veränderung der Auswahl der aus dem Mediaplayer auszugebenden Sätze von Medieninhalten aus einem von der Steuereinheit empfangenen Signal generiert. Das von der Steuereinheit empfangene Signal enthält eine automatisch oder manuell generierte Anweisung, welcher der auf dem Mediaplayer gespeicherten Sätze von Medieninhalten zu welchem Zeitpunkt auf welcher Ausgabe-Einrichtung ausgegeben werden soll. Das Steuerprogramm der Steuereinheit generiert ein entsprechendes Signal, das eine Anweisung enthält, welcher der auf dem Mediaplayer gespeicherten Sätze von Medieninhalten zu welchem Zeitpunkt auf welcher Ausgabe-Einrichtung ausgegeben werden soll.

In einer Weiterbildung der Erfindung wird das durch die Steuereinheit generierte Signal zur Veränderung der Auswahl der aus dem Mediaplayer auszugebenden Sätze von Medieninhalten an den Mediaplayer gesendet. Das von der Steuereinheit generierte Signal enthält eine Anweisung, welcher der auf dem Mediaplayer gespeicherten Sätze von Medieninhalten zu welchem Zeitpunkt auf welcher Ausgabe-Einrichtung ausgegeben werden soll. Das Signal wird von der Steuereinheit an den Mediaplayer gesendet, von dem Mediaplayer empfangen, ggfs. gespeichert und ausgewertet.

In einer weiteren Gestaltung der Erfindung führt das vom Mediaplayer empfangene Signal zur Veränderung der Auswahl der aus dem Mediaplayer auszugebenden Sätze von Medieninhalten. Das von der Steuereinheit generierte, von der Steuereinheit an den Mediaplayer gesandte und vom Mediaplayer empfangene Signal enthält eine Anweisung, welcher der auf dem Mediaplayer gespeicherten Sätze von Medieninhalten zu welchem Zeitpunkt ausgegeben werden soll. Die Veränderung der Auswahl der aus dem Mediaplayer auszugebenden Sätze von Medieninhalten erfolgt derart, dass ein anderer der auf dem Mediaplayer gespeicherten Sätze von Medieninhalten zur Ausgabe auf einer Ausgabe-Einrichtung ausgewählt wird, als der derzeit auf der Ausgabe-Einrichtung ausgegebene Satz von Medieninhalten.

In einer weiteren Ausbildung der Erfindung verändert das Steuerprogramm die Ausgabe der auszugebenden Sätze von Medieninhalten derart, dass die Ausgabe des ersten Satzes von Medieninhalten aus dem Speicher des Mediaplayers beendet und der zweite Satz von Medieninhalten aus dem Speicher des Mediaplayers ausgelesen und zur Ausgabe auf der Anzeigeeinrichtung gebracht wird.

Die Aufgabe wird weiterhin mittels des Gerichtssaal-Mediensystems mit einer Steuereinheit, einem mit der Steuereinheit gekoppelten Mediaplayer und einer Ausgabe-Einrichtung nach Anspruch 13 gelöst. Vorteilhafte Ausführungen der Erfindung sind ebenfalls in den nach folgenden Unteransprüchen dargelegt.

Das erfindungsgemäße Gerichtssaal-Mediensystem weist eine Steuereinheit, einen mit der Steuereinheit gekoppelten Mediaplayer sowie eine Ausgabe-Einrichtung auf. Die Ausgabe-Einrichtung ist geeignet und dafür vorgesehen, Bild- und/oder Toninhalte auszugeben, oder die Ausgabe-Einrichtung ist mit Einrichtungen zur Ausgabe von Bild- und/oder Toninhalten verbunden.

Erfindungsgemäß sind auf dem Mediaplayer mehrere separate und individuelle Sätze von Medieninhalten speicherbar. Die Sätze von Medieninhalten weisen Bild- und/oder Toninhalte auf, die z.B. Aufnahmen von Zeugenaussagen, Beweisdokumente und/oder Film- oder Tonaufnahmen enthalten können.

Außerdem ist auf der Steuereinheit ein Steuerprogramm ausführbar, das steuert, welcher der Sätze von Medieninhalten auf der Ausgabe-Einrichtung zur Ausgabe gebracht wird. Insbesondere wird die Ausgabe der ausgegebenen Medieninhalte derart gesteuert, dass zu einem ersten Zeitpunkt ein erster Satz von Medieninhalten ausgegeben wird, zu einem zweiten Zeitpunkt wird ein zweiter Satz von Medieninhalten ausgegeben. Das Steuerprogramm kann die Ausgabe der ausgegebenen Medieninhalte auch derart verändern, dass auf einer Mehrzahl von Ausgabe-Einrichtungen gleichzeitig eine Mehrzahl von Sätzen von Medieninhalten ausgegeben werden, z.B. wird auf einer ersten Ausgabe-Einrichtung ein erster Satz von Medieninhalten ausgeben, gleichzeitig wird auf einer zweiten Ausgabe-Einrichtung ein zweiter Satz von Medieninhalten ausgegeben.

In einer Weiterbildung der Erfindung ist das Mediensystem über eine Matrixschaltung mit einer Vielzahl Quellen und Ausgabeeinrichtungen zur Ausgabe von Bild- und/oder Toninhalten gekoppelt. Mittels der Matrix-Schaltung werden die von den Quellen gelieferten Bild- und/oder Toninhalte derart geschaltet, dass die Bild- und Toninhalte auf allen, einer Mehrzahl oder auch nur auf einer einzelnen Ausgabe-Einrichtung ausgegeben werden. Alle Quellen und ebenso alle Ausgabe-Einrichtungen sind dabei mit der Matrix-Schaltung verbunden. Die Anbindung der zu steuernden Geräte kann über Ethernet, RS-232, Infrarot, Relais oder generelle I/O Ports erfolgen.

In einer weiteren Ausführung der Erfindung ist durch die mit dem Mediaplayer gekoppelte Steuereinheit die Matrixschaltung mit einer Vielzahl Quellen und Ausgabeeinrichtungen zur Ausgabe von Bild- und/oder Toninhalten steuerbar Auf der separaten Steuereinheit ist die Konfiguration für die Steuerung der Matrix-Schaltung gespeichert. Die Konfiguration beinhaltet insbesondere Art und Anordnung der Ausgabeeinrichtungen sowie der Quellen. Auf der separaten Steuereinheit sind außerdem die Steuerbefehle der an die Matrix-Schaltung angeschlossenen Ausgabeeinrichtungen und Quellen gespeichert.

Ausführungsbeispiele des erfindungsgemäßen Verfahrens zum Wechseln von unterschiedlichen Sätzen von Medieninhalten zur Ausgabe der Medieninhalte auf einer Ausgabeeinrichtung eines Gerichtssaal-Mediensystems und des erfindungsgemäßen Gerichtssaal-Mediensystems sind in den Zeichnungen schematisch vereinfacht dargestellt und werden in der nachfolgenden Beschreibung näher erläutert.

### Es zeigen:

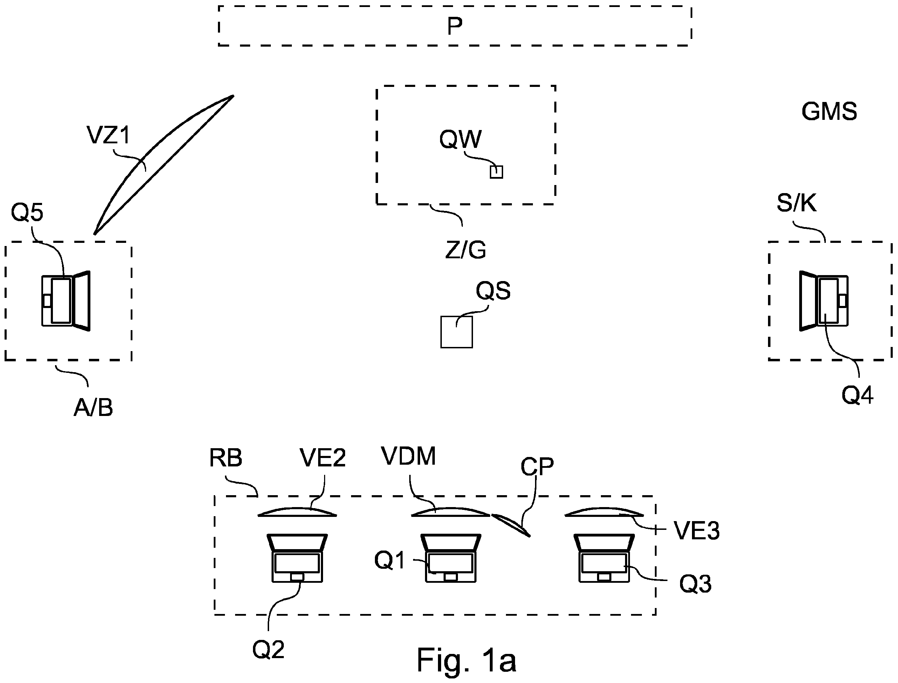

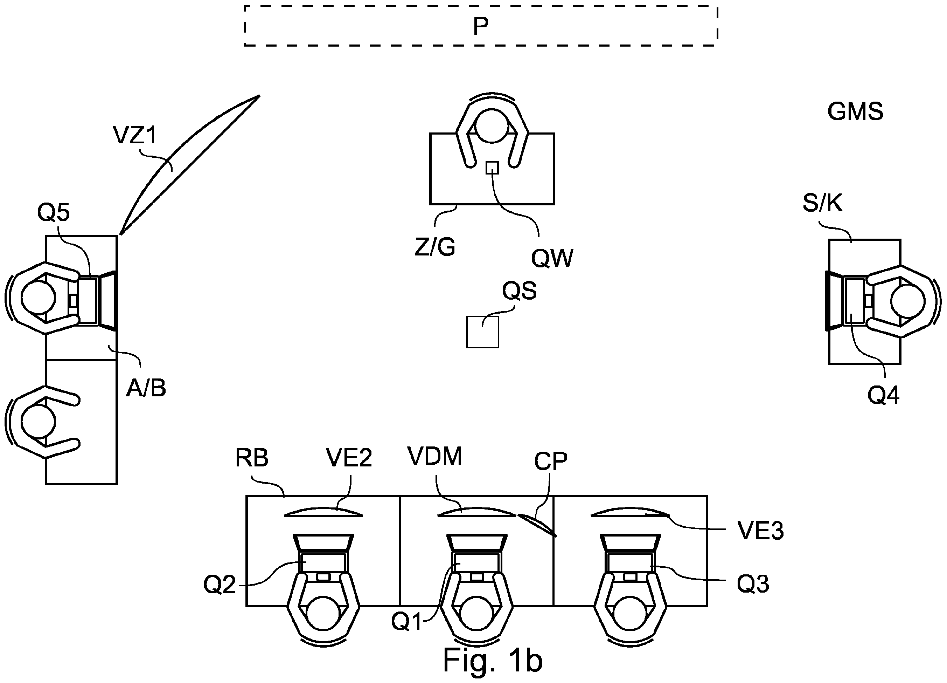

- Fig. 1 a:: Gerichtssaal-Mediensystem: Anordnung der unterschiedlichen Bereiche
- Fig. 1 b:: Gerichtssaal-Mediensystem: Anordnung der Quellen und Ausgabe-Einrichtungen
- Fig. 2:: Gerichtssaal-Mediensystem: ein Mediaplayer und eine zweite Ausgabe-Einrichtung
- Fig. 3:: Verfahren zum Wechseln von unterschiedlichen Sätzen von Medieninhalten zur Ausgabe der Medieninhalte auf einer Ausgabeeinrichtung eines Gerichtssaales, ein Mediaplayer und eine zweite Ausgabe-Einrichtung
- Fig. 4:: Gerichtssaal-Mediensystem: ein Mediaplayer und eine zweite Ausgabe-Einrichtung
- Fig. 5:: Verfahren zum Wechseln von unterschiedlichen Sätzen von Medieninhalten zur Ausgabe der Medieninhalte auf einer Ausgabeeinrichtung eines Gerichtssaales, ein Mediaplayer und eine zweite Ausgabe-Einrichtung
- Fig. 6:: Gerichtssaal-Mediensystem: Anordnung der Bereiche, der Quellen und Ausgabe-Einrichtungen
- Fig. 7:: Gerichtssaal-Mediensystem: Anordnung der Quellen und Ausgabe-Einrichtungen
- Fig. 8:: Verfahren zum Wechseln von unterschiedlichen Sätzen von Medieninhalten zur Ausgabe der Medieninhalte auf einer Ausgabeeinrichtung eines Gerichtssaales, ein Mediaplayer und zwei zweite Ausgabe-Einrichtungen
- Fig. 9:: Gerichtssaal-Mediensystem; Anordnung der Bereiche, der Quellen und Ausgabe-Einrichtungen
- Fig. 10:: Verfahren zum Wechseln von unterschiedlichen Sätzen von Medieninhalten zur Ausgabe der Medieninhalte auf einer Ausgabeeinrichtung eines Gerichtssaales, zwei Mediaplayer und zwei zweite Ausgabe-Einrichtungen
- Fig. 11:: Verfahren zum Wechseln von unterschiedlichen Sätzen von Medieninhalten zur Ausgabe der Medieninhalte auf einer Ausgabeeinrichtung eines Gerichtssaales, zwei Mediaplayer und zwei zweite Ausgabe-Einrichtungen

Fig. 1 zeigt eine schematische Draufsicht eines Ausführungsbeispiels des erfindungsgemäßen Gerichtssaal-Mediensystems GMS in einem Gerichtssaal. Der Gerichtssaal weist einen öffentlich zugänglichen Bereich P für Zuschauer, eine Richterbank RB mit jeweils einem Platz für den Vorsitzenden Richter und zwei Beisitzenden Richtern, einen Bereich Z/G für Zeugen bzw. Gutachter, einen Bereich für die Prozessparteien, Verteidigung A/B mit Beklagtem und dessen Rechtsvertreter sowie Klage S/K mit dem Kläger auf.

Die Quellen Q1, Q2, Q3, Q4, Q5 sind in diesem Ausführungsbeispiel mobile Endgeräte (Laptops) des Vorsitzenden Richters Q1, der beiden Beisitzer Q2, Q3, sowie jeweils ein mobiles Endgerät Q4, Q5 der beiden Prozessparteien (Fig. 1 a, 1 b). Zusätzlich wird über einen freien Anschluss die Möglichkeit bereitgestellt, dass ein Zeuge und/oder ein Gutachter eine freie Quelle QW anschließen kann. Zusätzlich weist das Gerichtssaal-Mediensystem GMS eine steuerbare Quelle QS auf, z.B. eine steuerbare Kamera zur Dokumentation der Gerichtsverhandlung.

Das Gerichtssaal-Mediensystem GMS weist die Ausgabeeinrichtungen VDM, VE2, VE3, VZ1 auf. Die Ausgabeeinrichtung VDM ist dabei die Master-Ausgabeeinrichtung und gibt Bild- und/oder Toninhalte dem Vorsitzenden Richter oder einem von ihm beauftragen Bediener des Gerichtssaal-Mediensystems GMS aus. Die ersten Ausgabeeinrichtungen VE2, VE3 sind dafür eingerichtet, Bild- und/oder Toninhalte den Beisitzern auszugeben. Die zweite Ausgabeeinrichtung VZ1 ist eine öffentlich zugängliche Ausgabeeinrichtung, in diesem Ausführungsbeispiel Großbildschirme oder Leinwände zur Ausgabe von Medieninhalten, insbesondere Bild- und/oder Toninhalten.

Die Steuerung des Gerichtssaal-Mediensystem GMS erfolgt über ein Control-Panel CP. Der Vorsitzende Richter kann mittels des Control-Panel CP die gesamte Technik des Gerichtssaal-Mediensystem GMS im Sitzungssaal steuern. Es ist aber auch möglich, diese Steuerung über das Control-Panel CP an eine andere Person zu übertragen, so dass der Vorsitzende damit nicht zusätzlich belastet wird.

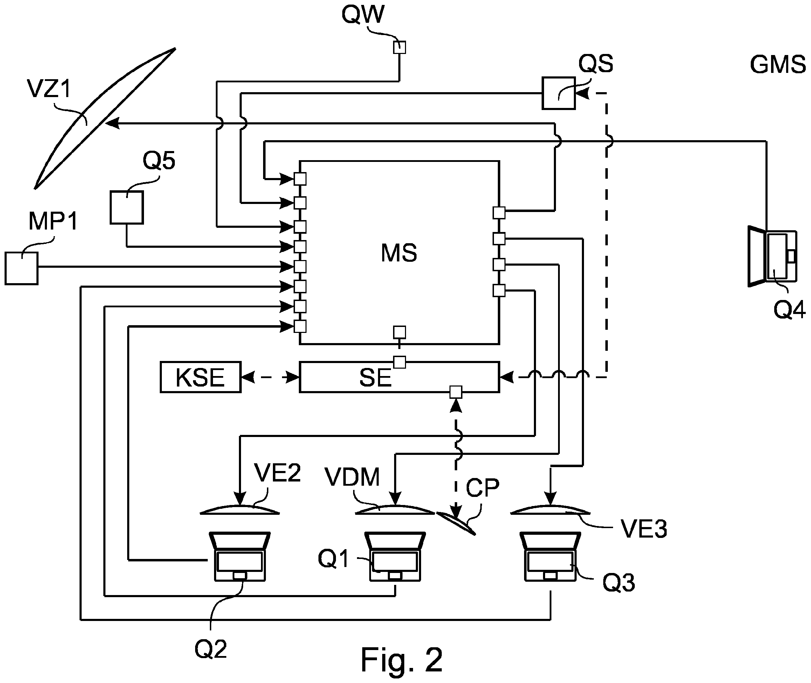

Die Verbindungen zwischen den einzelnen Komponenten des erfindungsgemäßen Gerichtssaal-Mediensystems GMS zeigt Fig. 2. Die Gerichtssaal-Mediensystem GMS weist als zentrales Element die Matrix-Schaltung MS auf, mit der sämtliche Quellen Q1, Q2, Q3, Q4, Q5, QW, QS über Quell-Schnittstellen verbunden sind. Die Quellen Q1, Q2, Q3, Q4, Q5, QW, QS sind ebenfalls mobile Endgeräte (Laptops) des Vorsitzenden Richters Q1, der beiden Beisitzer Q2, Q3, sowie jeweils ein mobiles Endgerät Q4, Q5 der beiden Prozessparteien. Zusätzlich wird über einen freien Anschluss die Möglichkeit bereitgestellt, dass ein Zeuge und/oder ein Gutachter eine freie, temporär anschließbare Quelle QW anschließen kann. Die Matrix-Schaltung MS ist mit der zentralen Steuereinheit SE verbunden und durch diese steuerbar. Außerdem ist mit der Matrix-Schaltung MS eine mittels der zentralen Steuereinheit SE steuerbare Quelle QS verbunden.

Mit der Matrix-Schaltung MS sind weiterhin die Ausgabeeinrichtungen VDM, VE2, VE3, VZ1 über Ausgabe-Schnittstellen angeschlossen. Die Ausgabeeinrichtung VDM ist dabei die Master-Ausgabeeinrichtung und gibt Bild- und/oder Toninhalte dem Vorsitzenden Richter aus. Die ersten Ausgabeeinrichtungen VE2, VE3 sind dafür eingerichtet, Bild- und/oder Toninhalte den Beisitzern auszugeben. Die zweite Ausgabeeinrichtung VZ1 ist eine öffentlich einsehbare Ausgabeeinrichtung. Das Gerichtssaal-Mediensystem GMS weist in diesem Ausführungsbeispiel einen Mediaplayer MP1 auf, der mit der Matrix-Schaltung MS über eine Schnittstelle verbunden ist.

Die Matrix-Schaltung MS ist in diesem Ausführungsbeispiel in dem Gerichtssaal selbst angeordnet, möglich ist aber auch eine Anordnung der Matrix-Schaltung MS in einem entfernt gelegenen Ort, z.B. dem IT- und Server-Raum des Gerichtsgebäudes. Mit der zentralen Steuereinheit SE ist ebenfalls die Konfigurationssteuereinheit KSE lösbar verbunden, die separat angeordnet ist.

Über das Bedienelement des Control-Panels CP kann der Bediener des Control-Panels CP die Ausgabe der empfangenen Bild- und/oder Toninhalte steuern. Zur Konfiguration der Ausgabe und Wechseln von unterschiedlichen Sätzen von Medieninhalten des erfindungsgemäßen Gerichtssaal-Mediensystems GMS erfolgt eine Abfrage von Daten zur Installation und/oder Konfiguration der zentralen Steuereinheit SE. Die Daten zur Installation und/oder Konfiguration der zentralen Steuereinheit SE sind in einem Speicher der separaten Konfigurationssteuereinheit KSE gespeichert. Die Daten enthalten die für den betreffenden Gerichtssaal, in dem das Gerichtssaal-Mediensystem GMS angewandt werden soll, installations- und/oder konfigurationsrelevante Einstellungen. Diese Daten werden von der zentralen Steuereinheit SE eingelesen. Danach erfolgt die Installation und/oder Konfiguration auf der zentralen Steuereinheit SE. Auf der zentralen Steuereinheit SE wird dazu ein Programm ausgeführt.

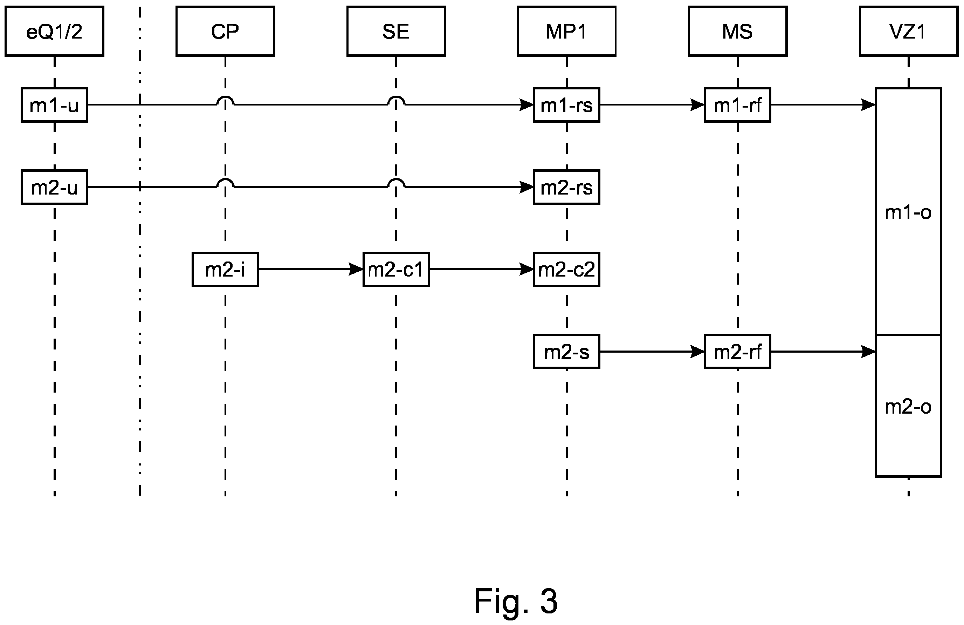

Fig. 3 zeigt schematisch den zeitlichen Ablauf des erfindungsgemäßen Verfahrens zum Wechseln von unterschiedlichen Sätzen von Medieninhalten m1-u, m2-u, ausgeführt mittels eines Gerichtssaal-Mediensystems GMS, das im vorhergehenden Ausführungsbeispiel (s. Fig. 2) beschrieben ist. Das Gerichtssaal-Mediensystem GMS weist wie beschrieben ein Control-Panel CP, eine zentrale Steuereinheit SE, einen Mediaplayer MP1, auf dem eine Mehrzahl an separater und individueller Sätze von Medieninhalten speicherbar sind, die Matrix-Schaltung MS sowie eine zweite Ausgabe-Einrichtung VZ1 zur Ausgabe von Medieninhalten, insbesondere Bild- und/oder Toninhalten auf.

Zu Beginn des Verfahrens wird von den externen Quellen eQ1/2 ein erster Satz von Medieninhalten erzeugt m1-u und bereitgestellt. Zu einem ersten Zeitpunkt wird der erste Satz von Medieninhalten m1-u an den Mediaplayer MP1 gesendet und auf dem Speicher des Mediaplayers MP1 gespeichert m1-rs. Der erste Satz von Medieninhalten m1-u wird zu dessen Ausgabe von dem Speicher des Mediaplayers MP1 von der Matrix-Schaltung MS ausgelesen und in einem Speicher der Matrix-Schaltung MS gespeichert m1-rf. Der erste Satz von Medieninhalten wird auf der Ausgabe-Einrichtung VZ1 ausgegeben m1-o, indem die Matrix-Schaltung MS den gespeicherten ersten Satz von Medieninhalten m1-rf an den Speicher der zweiten Ausgabe-Einrichtung VZ1 sendet.

Während der Ausgabe des ersten Satzes von Medieninhalten m1-o wird zu einem späteren zweiten Zeitpunkt ein zweiter Satz von Medieninhalten m2-u von den externen Quellen eQ1/2 erzeugt m2-u, ebenfalls an den Mediaplayer MP1 gesendet und auf dem Speicher des Mediaplayers MP1 abgelegt m2-rs. Dabei ist der erste Satz von Medieninhalten, der im Speicher des Mediaplayers MP1 empfangen und gespeichert ist m1-rs, nicht aus dem Speicher des Mediaplayers MP1 gelöscht. Erster und zweiter Satz von Medieninhalten werden also zeitlich parallel im Speicher des Mediaplayers MP1 gespeichert m1-rs, m2-rs. Die von den externen Quellen eQ1/2 erzeugten m1-u, m2-u erzeugten Sätze von Medieninhalten weisen Bild- und/oder Toninhalte auf, z.B. Fotos, Filme, Tonbandaufnahmen von Zeugen bzw. Gutachtern.

Zur Veränderung der Auswahl der auf der Ausgabe-Einrichtung VZ1 auszugebenden Sätze der im Speicher des Mediaplayers MP1 abgelegten Sätze von Medieninhalten m1-rs, m2-rs erfolgt zu einem dritten Zeitpunkt ebenfalls während der Ausgabe des ersten Satzes von Medieninhalten m1-o durch die Ausgabe-Einrichtung VZ1 eine Eingabe m2-i in das Control-Panel CP, z.B. durch einen Bediener des Control-Panels CP.

Die Eingabe m2-i wird von der zentralen Steuereinheit SE empfangen und im Speicher der zentralen Steuereinheit SE gespeichert m2-c1. Die zentrale Steuereinheit SE weist ein Steuerprogramm auf, das ausgeführt wird und die empfangene Eingabe m2-c1 dahingehend auswertet, ob und welcher der im Speicher des Mediaplayers MP1 abgelegten Sätze von Medieninhalten m1-rs, m2-rs von der Ausgabe-Einrichtung VZ1 ausgegeben werden soll. In diesem Ausführungsbeispiel enthält die Eingabe m2-c1 eine Anweisung, auf der Ausgabe-Einrichtung VZ1 den auf dem Mediaplayer MP1 gespeicherten zweiten Satz von Medieninhalten m2-rs auszugeben.

Nach der Auswertung generiert das Steuerprogramm der zentralen Steuereinheit SE ein Signal zur Veränderung der Auswahl der aus dem Mediaplayer MP1 auszugebenden Medieninhalte m1-rs, m2-rs und sendet dieses generierte Signal an den Mediaplayer MP1, von dem das generierte Signal empfangen wird m2-c2. Das vom Mediaplayer MP1 empfangene Signal m2-c2 verändert die Auswahl der aus dem Mediaplayer MP1 auszugebenden Sätze von Medieninhalten, die auf dem Mediaplayer MP1 gespeichert sind m1-rs, m2-rs. Aufgrund des vom Mediaplayer MP1 empfangenen Signals m2-c2 wird der auf dem Mediaplayer MP1 gespeicherte m2-s zweite Satz von Medieninhalten von der Matrix-Schaltung MS ausgelesen m2-rf und in einem Speicher der Matrix-Schaltung MS gespeichert. Die Matrix-Schaltung MS sendet den gespeicherten zweiten Satz von Medieninhalten m2-rf an den Speicher der Ausgabe-Einrichtung VZ1, die Ausgabe m1-o des ersten Satzes von Medieninhalten durch die Ausgabe-Einrichtung VZ1 wird gestoppt und die Ausgabe-Einrichtung VZ1 gibt den zweiten Satz von Medieninhalten aus m2-o.

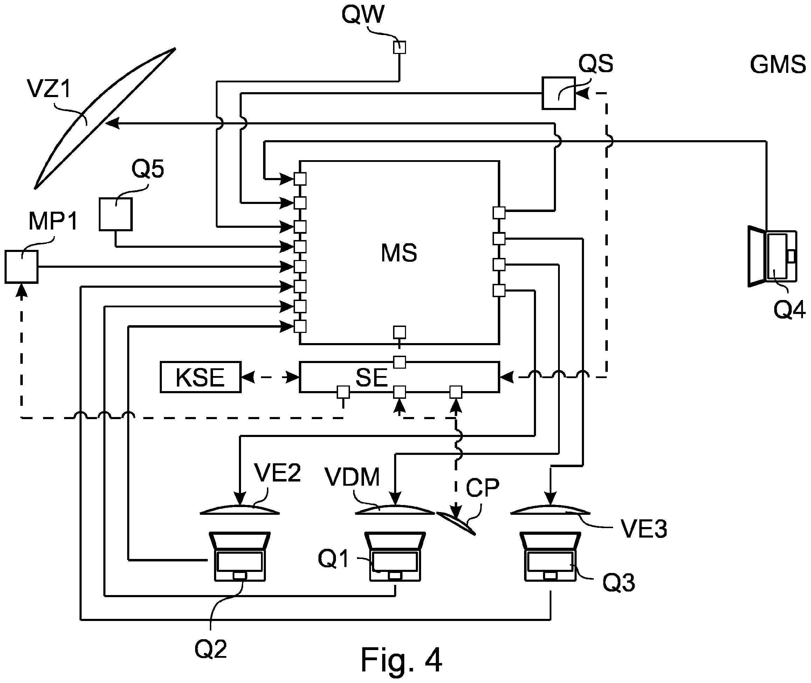

Die Verbindungen zwischen den Komponenten eines weiteren Ausführungsbeispiels des erfindungsgemäßen Gerichtssaal-Mediensystems GMS zeigt Fig. 4. Das Gerichtssaal-Mediensystem GMS weist als zentrales Element die Matrix-Schaltung MS auf, mit der sämtliche Quellen Q1, Q2, Q3, Q4, Q5, QW, QS über Quell-Schnittstellen verbunden sind. Die Quellen Q1, Q2, Q3, Q4, Q5, QW, QS sind ebenfalls mobile Endgeräte (Laptops) des Vorsitzenden Richters Q1, der beiden Beisitzer Q2, Q3, sowie jeweils ein mobiles Endgerät Q4, Q5 der beiden Prozessparteien. Zusätzlich wird über einen freien Anschluss die Möglichkeit bereitgestellt, dass ein Zeuge und/oder ein Gutachter eine freie, temporär anschließbare Quelle QW anschließen kann. Außerdem ist mit der Matrix-Schaltung MS eine mittels der zentralen Steuereinheit SE steuerbare Quelle QS verbunden.

Mit der Matrix-Schaltung MS sind weiterhin die Ausgabeeinrichtungen VDM, VE2, VE3, VZ1 über Ausgabe-Schnittstellen angeschlossen. Die Ausgabeeinrichtung VDM ist dabei die Master-Ausgabeeinrichtung und gibt Bild- und/oder Toninhalte dem Vorsitzenden Richter aus. Die ersten Ausgabeeinrichtungen VE2, VE3 sind dafür eingerichtet, Bild- und/oder Toninhalte den Beisitzern auszugeben. Die zweite Ausgabeeinrichtung VZ1 ist eine öffentlich zugängliche Ausgabeeinrichtung. Das Gerichtssaal-Mediensystem GMS weist in diesem Ausführungsbeispiel einen Mediaplayer MP1 auf, der mit der Matrix-Schaltung MS über eine Schnittstelle verbunden ist. Der Mediaplayer MP1 ist mit der zentralen Steuereinheit SE verbunden und durch die zentrale Steuereinheit SE steuerbar.

Die Matrix-Schaltung MS ist in diesem Ausführungsbeispiel in dem Gerichtssaal selbst angeordnet, möglich ist aber auch eine Anordnung der Matrix-Schaltung MS in einem entfernt gelegenen Ort, z.B. dem IT- und Server-Raum des Gerichtsgebäudes. Mit der zentralen Steuereinheit SE ist ebenfalls die Konfigurationssteuereinheit KSE lösbar verbunden, die separat angeordnet ist.

Über das Bedienelement des Control-Panels CP kann der Bediener des Control-Panels CP die von der steuerbaren Kamera QS empfangenen Bild- und/oder Toninhalte bearbeiten. Zur Konfiguration der Ausgabe und Wechseln von unterschiedlichen Sätzen von Medieninhalten des erfindungsgemäßen Gerichtssaal-Mediensystems GMS erfolgt eine Abfrage von Daten zur Installation und/oder Konfiguration der zentralen Steuereinheit SE. Die Daten zur Installation und/oder Konfiguration der zentralen Steuereinheit SE sind in einem Speicher der separaten Konfigurationssteuereinheit KSE gespeichert. Die Daten enthalten die für den betreffenden Gerichtssaal, in dem das Gerichtssaal-Mediensystem GMS angewandt werden soll, installations- und/oder konfigurationsrelevante Einstellungen. Diese Daten werden von der zentralen Steuereinheit SE eingelesen. Danach erfolgt die Installation und/oder Konfiguration auf der zentralen Steuereinheit SE. Auf der zentralen Steuereinheit SE wird dazu ein Programm ausgeführt.

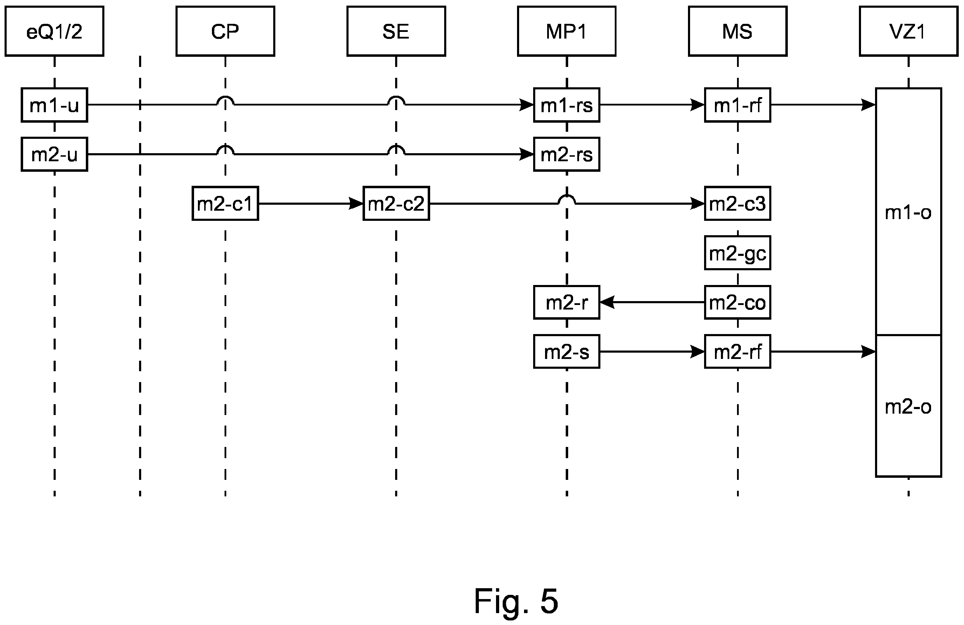

Fig. 5 zeigt schematisch den zeitlichen Ablauf des erfindungsgemäßen Verfahrens zum Wechseln von unterschiedlichen Sätzen von Medieninhalten m1-u, m2-u, ausgeführt mittels eines Gerichtssaal-Mediensystems GMS, das im vorhergehenden Ausführungsbeispiel (s. Fig. 4) beschrieben ist. Das Gerichtssaal-Mediensystem GMS weist wie beschrieben ein Control-Panel CP, eine zentrale Steuereinheit SE, einen Mediaplayer MP1, auf dem eine Mehrzahl an separaten und individuellen Sätzen von Medieninhalten speicherbar sind, die Matrix-Schaltung MS sowie eine zweite Ausgabe-Einrichtung VZ1 zur Ausgabe von Medieninhalten auf.

Zu Beginn des Verfahrens wird wie im vorhergehenden Ausführungsbeispiel (s. Fig. 3) von den externen Quellen eQ1/2 ein erster Satz von Medieninhalten erzeugt m1-u und bereitgestellt. Zu einem ersten Zeitpunkt wird der erste Satz von Medieninhalten m1-u an den Mediaplayer MP1 gesendet und auf dem Speicher des Mediaplayers MP1 gespeichert m1-rs. Die Matrix-Schaltung MS sendet m1-rf den gespeicherten ersten Satz von Medieninhalten an den Speicher der Ausgabe-Einrichtung VZ1, und die Ausgabe-Einrichtung VZ1 gibt den ersten Satz von Medieninhalten aus m1-o.

Während der Ausgabe des ersten Satzes von Medieninhalten m1-o wird zu einem späteren zweiten Zeitpunkt ein zweiter Satz von Medieninhalten m2-u von den externen Quellen eQ1/2 erzeugt m2-u, ebenfalls an den Mediaplayer MP1 gesendet und auf dem Speicher des Mediaplayers MP1 abgelegt m2-rs. Dabei ist der erste Satz von Medieninhalten, der im Speicher des Mediaplayers MP1 empfangen und gespeichert ist m1-rs, nicht aus dem Speicher des Mediaplayers MP1 gelöscht.

Zur Veränderung der Auswahl der auf der Ausgabe-Einrichtung VZ1 auszugebenden Sätze der im Speicher des Mediaplayers MP1 abgelegten m1-rs, m2-rsSätze von Medieninhalten erfolgt zu einem dritten Zeitpunkt ebenfalls während der Ausgabe des ersten Satzes von Medieninhalten m1-o durch die Ausgabe-Einrichtung VZ1 eine Eingabe m2-c1 in das Control-Panel CP.

Die Eingabe m2-c1 wird von der zentralen Steuereinheit SE empfangen und im Speicher der zentralen Steuereinheit SE gespeichert m2-c2. Die zentrale Steuereinheit SE weist ein Steuerprogramm auf, das ausgeführt wird und die empfangene Eingabe m2-c2 dahingehend auswertet, ob und welcher der im Speicher des Mediaplayers MP1 abgelegten Sätze von Medieninhalten m1-rs, m2-rs von der Ausgabe-Einrichtung VZ1 ausgegeben werden soll. In diesem Ausführungsbeispiel enthält die Eingabe m2-c2 wiederum eine Anweisung, auf der Ausgabe-Einrichtung VZ1 den auf dem Mediaplayer MP1 gespeicherten m2-rs zweiten Satz von Medieninhalten auszugeben.

Nach der Auswertung generiert das Steuerprogramm der zentralen Steuereinheit SE ein Signal zur Veränderung der Auswahl der aus dem Mediaplayer MP1 auszugebenden Medieninhalte m1-rs, m2-rs und sendet im Unterschied zum vorhergehenden Ausführungsbeispiel (s. Fig. 3) dieses generierte Signal an die Matrix-Schaltung MS, von der das Signal empfangen und gespeichert wird m2-c3. Auf der Matrix-Schaltung MS wird ein Programm ausgeführt, das das empfangene Signal m2-c3 auswertet und ein Signal zum Wechseln der auf dem Mediaplayer MP1 gespeicherten m1-rs, m2-rs Sätzen von Medieninhalten generiert m2-gc. Die Matrix-Schaltung MS sendet m2-co dann einen entsprechenden Befehl an den Mediaplayer MP1, der von dem Mediaplayer MP1 empfangen, gespeichert und ausgewertet m2-r wird. Der Mediaplayer MP1 generiert m2-s ein Signal, das an die Matrix-Schaltung MS gesendet wird. Die Matrix-Schaltung MS sendet den gespeicherten zweiten Satz von Medieninhalten m2-rf an den Speicher der Ausgabe-Einrichtung VZ1, die Ausgabe m1-o des ersten Satzes von Medieninhalten durch die Ausgabe-Einrichtung VZ1 wird gestoppt und die Ausgabe-Einrichtung VZ1 gibt den zweiten Satz von Medieninhalten aus m2-o.

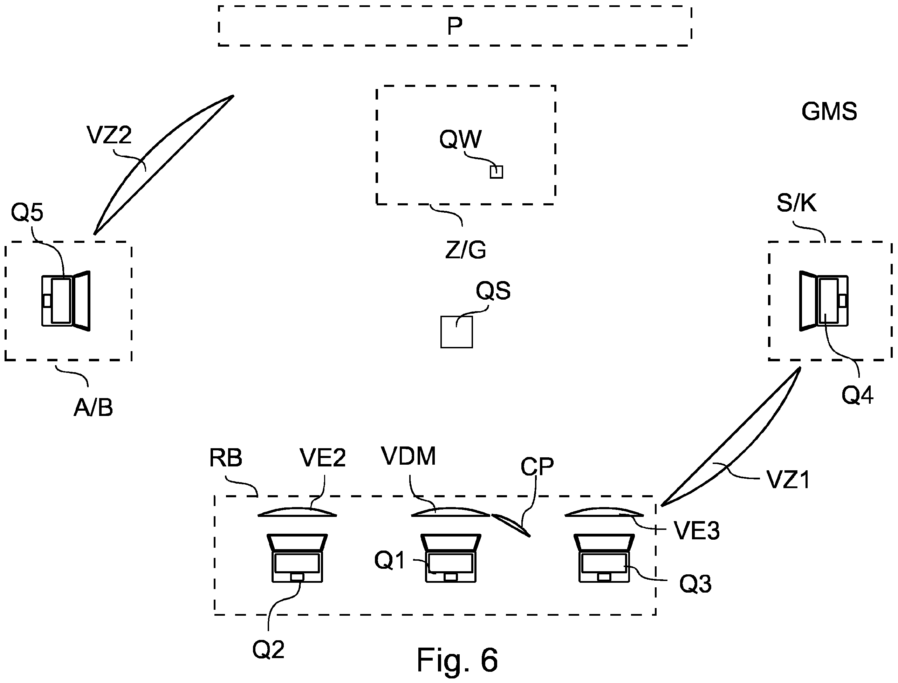

Fig. 6 zeigt eine schematische Draufsicht eines weiteren Ausführungsbeispiels des erfindungsgemäßen Gerichtssaal-Mediensystems GMS in einem Gerichtssaal. Das Gerichtssaal-Mediensystem GMS entspricht im Wesentlichen dem im vorhergehenden Ausführungsbeispiel (s. Fig. 1 a) beschriebenen Gerichtssaal-Mediensystem GMS, in diesem Ausführungsbeispiel sind jedoch zwei zweite Ausgabe-Einrichtungen VZ1, VZ2 an unterschiedlichen Positionen im Gerichtssaal angeordnet. Die beiden zweiten Ausgabeeinrichtung VZ1, VZ2 sind ebenfalls öffentlich zugängliche Ausgabeeinrichtungen, z.B. Großbildschirme oder Leinwände zur Ausgabe von Medieninhalten, insbesondere Bild- und/oder Toninhalten.

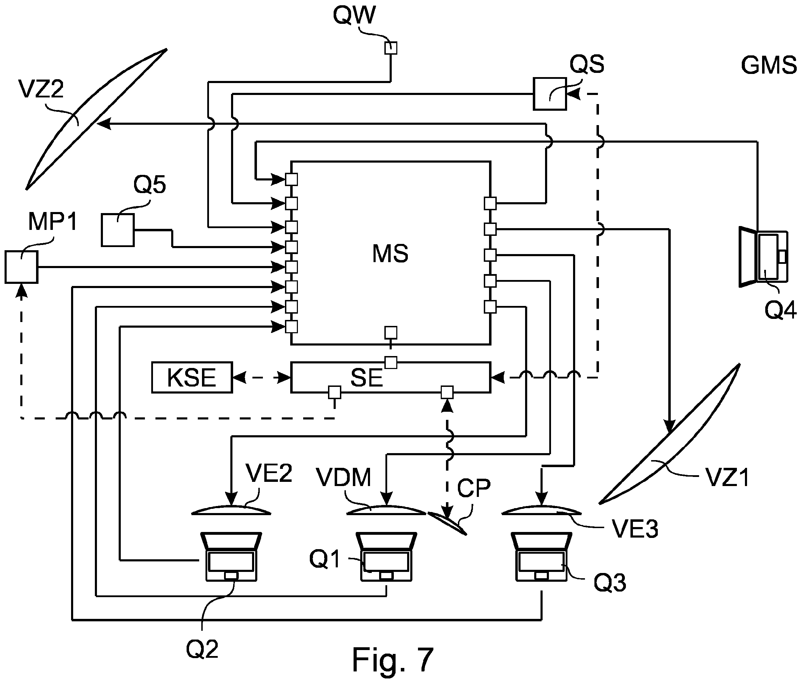

Die Verbindungen zwischen den Komponenten des erfindungsgemäßen Gerichtssaal-Mediensystems GMS zeigt Fig. 7. Die Gerichtssaal-Mediensystem GMS weist als zentrales Element die Matrix-Schaltung MS auf, mit der sämtliche Quellen Q1, Q2, Q3, Q4, Q5, QW, QS über Quell-Schnittstellen verbunden sind. Die Quellen Q1, Q2, Q3, Q4, Q5, QW, QS sind ebenfalls mobile Endgeräte (Laptops) des Vorsitzenden Richters Q1, der beiden Beisitzer Q2, Q3, sowie jeweils ein mobiles Endgerät Q4, Q5 der beiden Prozessparteien. Zusätzlich wird über einen freien Anschluss die Möglichkeit bereitgestellt, dass ein Zeuge und/oder ein Gutachter eine freie, temporär anschließbare Quelle QW anschließen kann. Außerdem ist mit der Matrix-Schaltung MS eine mittels der zentralen Steuereinheit SE steuerbare Quelle QS verbunden.

Mit der Matrix-Schaltung MS sind weiterhin die Ausgabeeinrichtungen VDM, VE2, VE3, VZ1, VZ2 über Ausgabe-Schnittstellen angeschlossen. Die Ausgabeeinrichtung VDM ist dabei die Master-Ausgabeeinrichtung und gibt Bild- und/oder Toninhalte dem Vorsitzenden Richter aus. Die ersten Ausgabeeinrichtungen VE2, VE3 sind dafür eingerichtet, Bild- und/oder Toninhalte den Beisitzern auszugeben. Die zweiten Ausgabeeinrichtungen VZ1, VZ2 sind öffentlich zugängliche Ausgabeeinrichtungen. Das Gerichtssaal-Mediensystem GMS weist in diesem Ausführungsbeispiel ebenfalls einen Mediaplayer MP1 auf, der mit der Matrix-Schaltung MS über eine Schnittstelle verbunden ist. Der Mediaplayer MP1 ist mit der zentralen Steuereinheit SE verbunden und durch die zentrale Steuereinheit SE steuerbar.

Mit der zentralen Steuereinheit SE ist ebenfalls die Konfigurationssteuereinheit KSE lösbar verbunden, die separat angeordnet ist. Über das Bedienelement des Control-Panels CP kann der Bediener des Control-Panels CP die Ausgabe der empfangenen Bild- und/oder Toninhalte steuern.

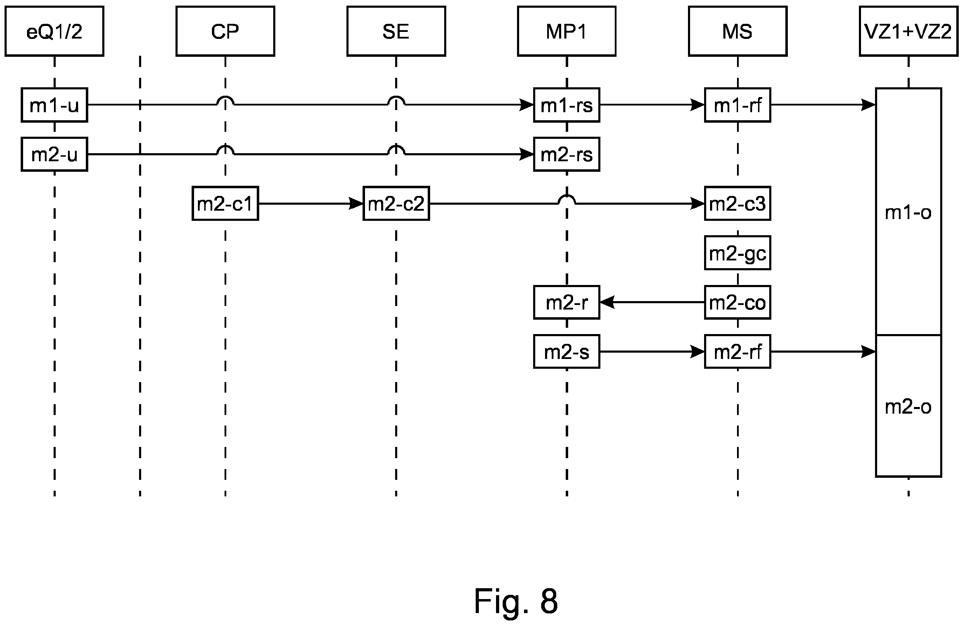

Fig. 8 zeigt schematisch den zeitlichen Ablauf des erfindungsgemäßen Verfahrens zum Wechseln von unterschiedlichen Sätzen von Medieninhalten m1-u, m2-u, ausgeführt mittels eines Gerichtssaal-Mediensystems GMS, das im vorhergehenden Ausführungsbeispiel (s. Fig. 6, 7) beschrieben ist. Das Gerichtssaal-Mediensystem GMS weist wie beschrieben ein Control-Panel CP, eine zentrale Steuereinheit SE, einen Mediaplayer MP1, auf dem eine Mehrzahl an separaten und individuellen Sätzen von Medieninhalten speicherbar sind, die Matrix-Schaltung MS sowie zwei zweite Ausgabe-Einrichtungen VZ1, VZ2 zur Ausgabe von Medieninhalten auf.

Das Verfahren entspricht dem im vorhergehenden Ausführungsbeispiel (s. Fig. 5) dargelegten Verfahren. Lediglich erfolgt die Ausgabe m1-o des ersten Satzes von Medieninhalten gleichzeitig durch die beiden Ausgabe-Einrichtungen VZ1, VZ2. Ebenfalls wird die Ausgabe m1-o des ersten Satzes von Medieninhalten auf beiden Ausgabe-Einrichtungen gleichzeitig VZ1, VZ2 gestoppt. Die Ausgabe-Einrichtungen VZ1, VZ2 geben gleichzeitig den zweiten Satz von Medieninhalten aus m2-o.

Zu Beginn des Verfahrens wird wie im vorhergehenden Ausführungsbeispiel (s. Fig. 5) von den externen Quellen eQ1/2 ein erster Satz von Medieninhalten erzeugt m1-u und bereitgestellt. Zu einem ersten Zeitpunkt wird der erste Satz von Medieninhalten m1-u an den Mediaplayer MP1 gesendet und auf dem Speicher des Mediaplayers MP1 gespeichert m1-rs. Die Matrix-Schaltung MS sendet m1-rf den gespeicherten ersten Satz von Medieninhalten gleichzeitig an den jeweiligen Speicher der beiden Ausgabe-Einrichtungen VZ1, VZ2 und die Ausgabe-Einrichtungen VZ1, VZ2 geben den ersten Satz von Medieninhalten gleichzeitig aus m1-o.

Während der Ausgabe des ersten Satzes von Medieninhalten m1-o wird zu einem späteren zweiten Zeitpunkt ein zweiter Satz von Medieninhalten m2-u von den externen Quellen eQ1/2 erzeugt m2-u, ebenfalls an den Mediaplayer MP1 gesendet und auf dem Speicher des Mediaplayers MP1 abgelegt m2-rs. Dabei ist der erste Satz von Medieninhalten, der im Speicher des Mediaplayers MP1 empfangen und gespeichert ist m1-rs, nicht aus dem Speicher des Mediaplayers MP1 gelöscht.

Zur Veränderung der Auswahl der auf den Ausgabe-Einrichtungen VZ1, VZ2 auszugebenden Sätze der im Speicher des Mediaplayers MP1 abgelegten m1-rs, m2-rs Sätze von Medieninhalten erfolgt zu einem dritten Zeitpunkt ebenfalls während der Ausgabe des ersten Satzes von Medieninhalten m1-o durch die Ausgabe-Einrichtungen VZ1, VZ2 eine Eingabe m2-c1 in das Control-Panel CP.

Die Eingabe m2-c1 wird von der zentralen Steuereinheit SE empfangen und im Speicher der zentralen Steuereinheit SE gespeichert m2-c2. Die zentrale Steuereinheit SE weist ein Steuerprogramm auf, das ausgeführt wird und die empfangene Eingabe m2-c2 dahingehend auswertet, ob und welcher der im Speicher des Mediaplayers MP1 abgelegten Sätze von Medieninhalten m1-rs, m2-rs von den Ausgabe-Einrichtungen VZ1, VZ2 ausgegeben werden soll. In diesem Ausführungsbeispiel enthält die Eingabe m2-c2 wiederum eine Anweisung, auf der Ausgabe-Einrichtung VZ1 den auf dem Mediaplayer MP1 gespeicherten m2-rs zweiten Satz von Medieninhalten auszugeben.

Nach der Auswertung generiert das Steuerprogramm der zentralen Steuereinheit SE ein Signal zur Veränderung der Auswahl der aus dem Mediaplayer MP1 auszugebenden Medieninhalte m1-rs, m2-rs und sendet dieses generierte Signal an die Matrix-Schaltung MS, von der das Signal empfangen und gespeichert wird m2-c3. Auf der Matrix-Schaltung MS wird ein Programm ausgeführt, das das empfangene Signal m2-c3 auswertet und ein Signal zum Wechseln der auf dem Mediaplayer MP1 gespeicherten m1-rs, m2-rs Sätzen von Medieninhalten generiert m2-gc. Die Matrix-Schaltung MS sendet m2-co dann einen entsprechenden Befehl an den Mediaplayer MP1, der von dem Mediaplayer MP1 empfangen, gespeichert und ausgewertet m2-r wird. Der Mediaplayer MP1 generiert m2-s ein Signal, das an die Matrix-Schaltung MS gesendet wird.

Die Matrix-Schaltung MS sendet den gespeicherten zweiten Satz von Medieninhalten m2-rf gleichzeitig an die jeweiligen Speicher der Ausgabe-Einrichtungen VZ1, VZ2, die Ausgabe m1-o des ersten Satzes von Medieninhalten durch die Ausgabe-Einrichtungen VZ1, VZ2 wird gleichzeitig gestoppt und die Ausgabe-Einrichtungen VZ1, VZ2 geben den zweiten Satz von Medieninhalten gleichzeitig aus m2-o.

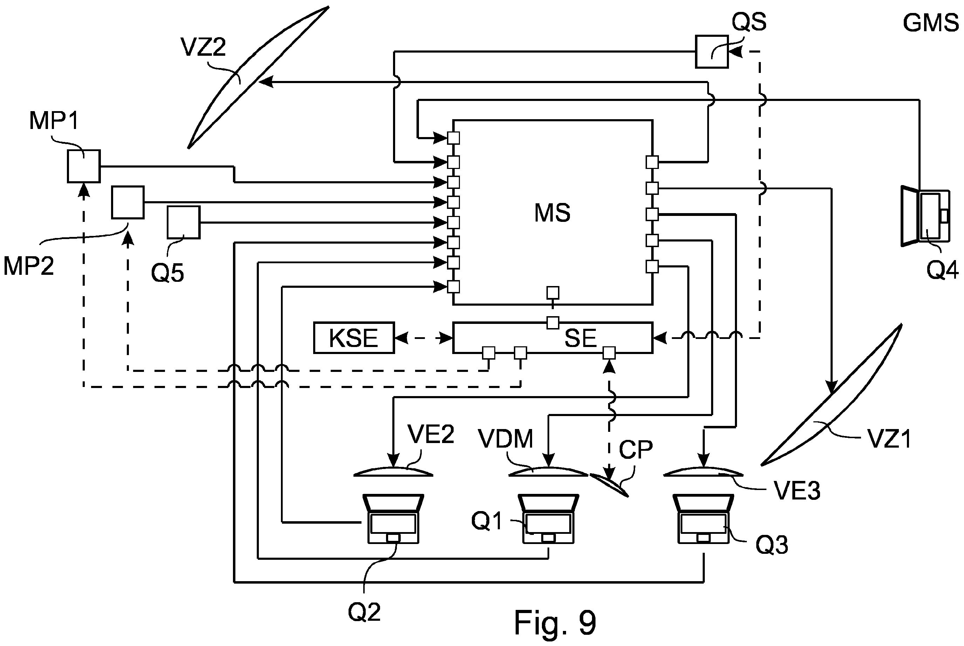

Die Verbindungen zwischen den Komponenten eines weiteren Ausführungsbeispiels des erfindungsgemäßen Gerichtssaal-Mediensystems GMS zeigt Fig. 9. Die Gerichtssaal-Mediensystem GMS weist als zentrales Element die Matrix-Schaltung MS auf, mit der sämtliche Quellen Q1, Q2, Q3, Q4, Q5, QW, QS über Quell-Schnittstellen verbunden sind.

Die Quellen Q1, Q2, Q3, Q4, Q5, QW, QS sind ebenfalls mobile Endgeräte (Laptops) des Vorsitzenden Richters Q1, der beiden Beisitzer Q2, Q3, sowie jeweils ein mobiles Endgerät Q4, Q5 der beiden Prozessparteien. Zusätzlich wird über einen freien Anschluss die Möglichkeit bereitgestellt, dass ein Zeuge und/oder ein Gutachter eine freie, temporär anschließbare Quelle QW anschließen kann. Außerdem ist mit der Matrix-Schaltung MS eine mittels der zentralen Steuereinheit SE steuerbare Quelle QS verbunden.

Mit der Matrix-Schaltung MS sind weiterhin die Ausgabeeinrichtungen VDM, VE2, VE3, VZ1, VZ2 über Ausgabe-Schnittstellen angeschlossen. Die Ausgabeeinrichtung VDM ist dabei die Master-Ausgabeeinrichtung und gibt Bild- und/oder Toninhalte dem Vorsitzenden Richter aus. Die ersten Ausgabeeinrichtungen VE2, VE3 sind dafür eingerichtet, Bild- und/oder Toninhalte den Beisitzern auszugeben. Die zweiten Ausgabeeinrichtungen VZ1, VZ2 sind öffentlich zugängliche Ausgabeeinrichtungen. Das Gerichtssaal-Mediensystem GMS weist in diesem Ausführungsbeispiel zwei Mediaplayer MP1, MP2 auf, die jeweils mit der Matrix-Schaltung MS über jeweils eine Schnittstelle verbunden sind. Die Mediaplayer MP1, MP2 sind mit der zentralen Steuereinheit SE verbunden und durch die zentrale Steuereinheit SE steuerbar.

Mit der zentralen Steuereinheit SE ist ebenfalls die Konfigurationssteuereinheit KSE lösbar verbunden, die separat angeordnet ist. Über das Bedienelement des Control-Panels CP kann der Bediener des Control-Panels CP die Ausgabe der empfangenen Bild- und/oder Toninhalte steuern.

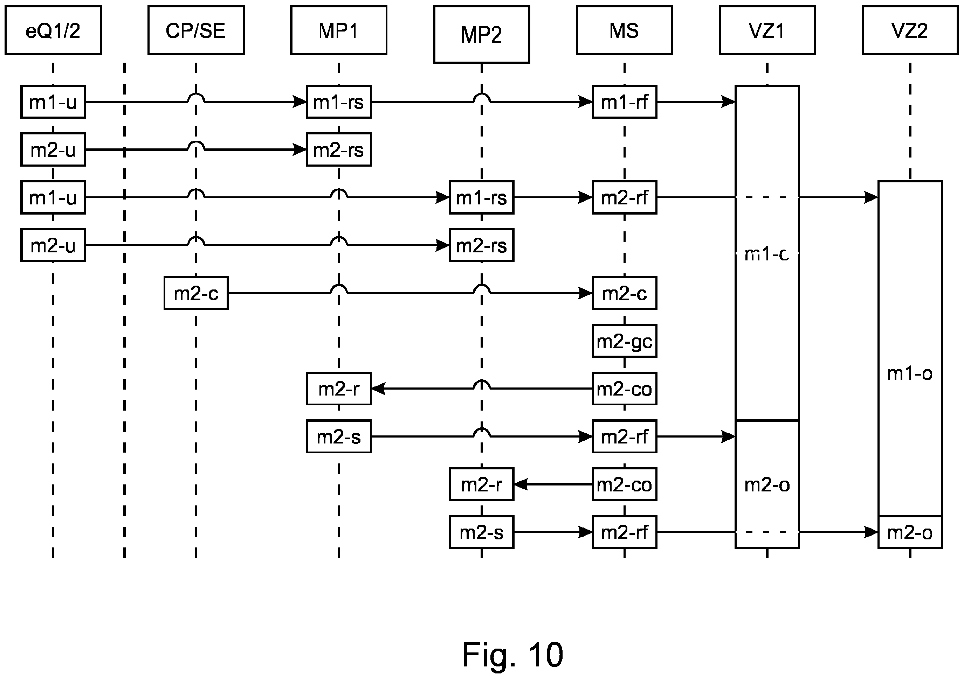

Fig. 10 zeigt schematisch den zeitlichen Ablauf des erfindungsgemäßen Verfahrens zum Wechseln von unterschiedlichen Sätzen von Medieninhalten m1-u, m2-u, ausgeführt mittels eines Gerichtssaal-Mediensystems GMS, das im vorhergehenden Ausführungsbeispiel (s. Fig. 9) beschrieben ist. Das Gerichtssaal-Mediensystem GMS weist ein Control-Panel CP, eine zentrale Steuereinheit SE, zwei Mediaplayer MP1, MP2, die Matrix-Schaltung MS sowie zwei zweite Ausgabe-Einrichtungen VZ1, VZ2 zur Ausgabe von Medieninhalten auf.

Zu Beginn des Verfahrens wird von den externen Quellen eQ1/2 ein erster Satz von Medieninhalten erzeugt m1-u und bereitgestellt. Zu einem ersten Zeitpunkt wird der erste Satz von Medieninhalten m1-u an den ersten Mediaplayer MP1 gesendet und auf dem Speicher des Mediaplayers MP1 gespeichert m1-rs. Die Matrix-Schaltung MS sendet m1-rf den gespeicherten ersten Satz von Medieninhalten an den Speicher der ersten der zwei zweiten Ausgabe-Einrichtungen VZ1, und die Ausgabe-Einrichtung VZ1 gibt den ersten Satz von Medieninhalten aus m1-o.

Während der Ausgabe des ersten Satzes von Medieninhalten m1-o auf der Ausgabe-Einrichtung VZ1 wird zu einem späteren zweiten Zeitpunkt ein zweiter Satz von Medieninhalten m2-u von den externen Quellen eQ1/2 erzeugt m2-u, ebenfalls an den ersten Mediaplayer MP1 gesendet und auf dem Speicher des Mediaplayers MP1 abgelegt m2-rs. Dabei ist der erste Satz von Medieninhalten, der im Speicher des Mediaplayers MP1 empfangen und gespeichert ist m1-rs, nicht aus dem Speicher des Mediaplayers MP1 gelöscht.

Zu einem späteren dritten Zeitpunkt wird von den externen Quellen eQ1/2 ein weiterer erster Satz von Medieninhalten erzeugt m1-u und bereitgestellt. Dieser erste Satz von Medieninhalten m1-u wird an den zweiten Mediaplayer MP2 gesendet und auf dem Speicher des zweiten Mediaplayers MP2 gespeichert m1-rs. Die Matrix-Schaltung MS sendet m1-rf den gespeicherten ersten Satz von Medieninhalten an den Speicher der zweiten der zwei zweiten Ausgabe-Einrichtungen VZ2, und die Ausgabe-Einrichtung VZ2 gibt den ersten Satz von Medieninhalten aus m1-o, während der erste Satz von Medieninhalten auf der ersten der zwei zweiten Ausgabe-Einrichtungen VZ1 ausgegeben m1-o wird. Die beiden ersten bereitgestellten m1-u Sätze von Medieninhalten werden also in diesem Ausführungsbeispiel gleichzeitig auf beiden Ausgabe-Einrichtungen VZ1, VZ2 ausgegeben.

Zu einem weiteren vierten Zeitpunkt wird von den externen Quellen eQ1/2 ein weiterer zweiter Satz von Medieninhalten erzeugt m2-u und bereitgestellt. Der zweite Satz von Medieninhalten m2-u wird an den zweiten Mediaplayer MP2 gesendet und auf dem Speicher des Mediaplayers MP2 gespeichert m2-rs.

In diesem Ausführungsbeispiel werden also zu vier unterschiedlichen Zeitpunkten zwei erste sowie zwei zweite Sätze von Medieninhalten erzeugt m1-u, m2-u und bereitgestellt. Die generierten m1-u, m2-u Sätze von Medieninhalten sind derart generiert, dass die zwei ersten generierten m1-u Sätze von Medieninhalten jeweils zueinander die gleichen Medieninhalte aufweisen. Ebenfalls weisen die zwei zweiten generierten m2-u Sätze von Medieninhalten jeweils zueinander die gleichen Medieninhalte auf. Die generierten m1-u, m2-u ersten und zweiten Sätze von Medieninhalten weisen jedoch zueinander unterschiedliche Medieninhalte auf.

Zur Veränderung der Auswahl der auf den Ausgabe-Einrichtungen VZ1, VZ2 auszugebenden Sätze der im Speicher der Mediaplayer MP1, MP2 abgelegten m1-rs, m2-rs Sätze von Medieninhalten erfolgt zu einem fünften Zeitpunkt während der Ausgabe des ersten Satzes von Medieninhalten m1-o durch die Ausgabe-Einrichtung VZ1 sowie der Ausgabe des zweiten Satzes von Medieninhalten m2-o durch die Ausgabe-Einrichtung VZ2 eine Eingabe m2-c in das Control-Panel CP, die von der zentralen Steuereinheit SE empfangen und im Speicher der zentralen Steuereinheit SE gespeichert wird.

Die zentrale Steuereinheit SE weist ein Steuerprogramm auf, das ausgeführt wird und die empfangene Eingabe m2-c2 dahingehend auswertet, ob und welcher der im Speicher der Mediaplayer MP1, MP2 abgelegten Sätze von Medieninhalten m1-rs, m2-rs von den Ausgabe-Einrichtungen VZ1, VZ2 ausgegeben werden soll. In diesem Ausführungsbeispiel enthält die Eingabe m2-c eine Anweisung, die Ausgabe der Medieninhalte derart zu wechseln, dass auf der ersten der zwei zweiten Ausgabe-Einrichtungen VZ1 sowie auf der zweiten der zwei zweiten Ausgabe-Einrichtungen VZ2 jeweils der zweite Satz von Medieninhalten ausgegeben werden soll.

Nach der Auswertung generiert m2-c das Steuerprogramm der zentralen Steuereinheit SE ein Signal zur Veränderung der Auswahl der aus dem Mediaplayer MP1 auszugebenden Medieninhalte m1-rs, m2-rs und sendet dieses generierte m2-c Signal an die Matrix-Schaltung MS, von der das Signal empfangen und gespeichert wird m2-c. Auf der Matrix-Schaltung MS wird ein Programm ausgeführt, das das empfangene Signal m2-c auswertet und ein Signal zum Wechseln der auf dem Mediaplayer MP1 gespeicherten m1-rs, m2-rs Sätzen von Medieninhalten generiert m2-gc.

Die Matrix-Schaltung MS sendet m2-co zunächst einen entsprechenden Befehl an den ersten Mediaplayer MP1, der von dem ersten Mediaplayer MP1 empfangen, gespeichert und ausgewertet m2-r wird. Der Mediaplayer MP1 generiert m2-s ein Signal, das an die Matrix-Schaltung MS gesendet wird. Die Matrix-Schaltung MS sendet den gespeicherten zweiten Satz von Medieninhalten m2-rf an den Speicher der Ausgabe-Einrichtung VZ1, die Ausgabe m1-o des ersten Satzes von Medieninhalten durch die Ausgabe-Einrichtung VZ1 wird gestoppt und die Ausgabe-Einrichtung VZ1 gibt den zweiten Satz von Medieninhalten aus m2-o.

Zum Wechseln des auf der zweiten der beiden zweiten Ausgabe-Einrichtung VZ2 ausgegebenen m1-o Satzes von Medieninhalten sendet m2-co die Matrix-Schaltung MS einen entsprechenden Befehl an den zweiten Mediaplayer MP2, der von dem zweiten Mediaplayer MP2 empfangen, gespeichert und ausgewertet m2-r wird. Der zweite Mediaplayer MP2 generiert m2-s ein Signal, das an die Matrix-Schaltung MS gesendet wird. Die Matrix-Schaltung MS sendet den gespeicherten zweiten Satz von Medieninhalten m2-rf an den Speicher der Ausgabe-Einrichtung VZ2, die Ausgabe m1-o des ersten Satzes von Medieninhalten durch die Ausgabe-Einrichtung VZ2 wird gestoppt und die Ausgabe-Einrichtung VZ1 gibt den zweiten Satz von Medieninhalten aus m2-o.

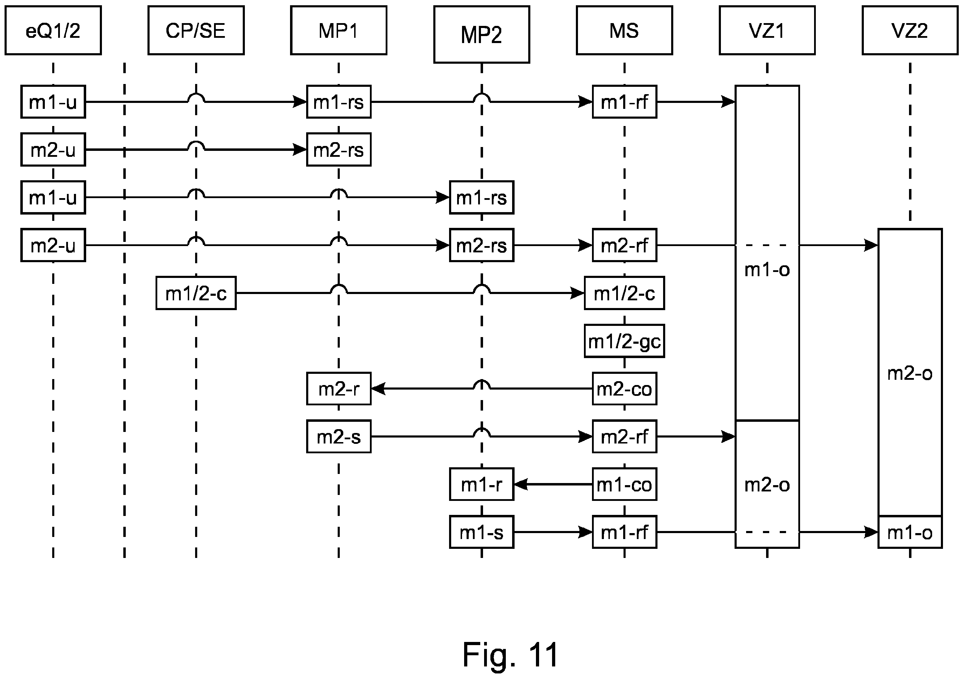

Fig. 11 zeigt eine Variante des zeitlichen Ablaufs des vorhergehenden Ausführungsbeispiels (s. Fig. 10) des erfindungsgemäßen Verfahrens zum Wechseln von unterschiedlichen Sätzen von Medieninhalten m1-u, m2-u, ausgeführt ebenfalls mittels eines Gerichtssaal-Mediensystems GMS, das im vorhergehenden Ausführungsbeispiel (s. Fig. 9) beschrieben ist. Das Gerichtssaal-Mediensystem GMS weist ein Control-Panel CP, eine zentrale Steuereinheit SE, zwei Mediaplayer MP1, MP2, die Matrix-Schaltung MS sowie zwei zweite Ausgabe-Einrichtungen VZ1, VZ2 zur Ausgabe von Medieninhalten auf.

Zu Beginn des Verfahrens wird von den externen Quellen eQ1/2 ein erster Satz von Medieninhalten erzeugt m1-u und bereitgestellt. Zu einem ersten Zeitpunkt wird der erste Satz von Medieninhalten m1-u an den ersten Mediaplayer MP1 gesendet und auf dem Speicher des Mediaplayers MP1 gespeichert m1-rs. Die Matrix-Schaltung MS sendet m1-rf den gespeicherten ersten Satz von Medieninhalten an den Speicher der ersten der zwei zweiten Ausgabe-Einrichtungen VZ1, und die Ausgabe-Einrichtung VZ1 gibt den ersten Satz von Medieninhalten aus m1-o.

Während der Ausgabe des ersten Satzes von Medieninhalten m1-o auf der Ausgabe-Einrichtung VZ1 wird zu einem späteren zweiten Zeitpunkt ein zweiter Satz von Medieninhalten m2-u von den externen Quellen eQ1/2 erzeugt m2-u, ebenfalls an den ersten Mediaplayer MP1 gesendet und auf dem Speicher des Mediaplayers MP1 abgelegt m2-rs. Dabei ist der erste Satz von Medieninhalten, der im Speicher des Mediaplayers MP1 empfangen und gespeichert ist m1-rs, nicht aus dem Speicher des Mediaplayers MP1 gelöscht.

Zu einem späteren dritten Zeitpunkt wird von den externen Quellen eQ1/2 ein weiterer erster Satz von Medieninhalten erzeugt m1-u und bereitgestellt. Dieser erste Satz von Medieninhalten m1-u wird an den zweiten Mediaplayer MP2 gesendet und auf dem Speicher des Mediaplayers MP1 gespeichert m1-rs.

Zu einem weiteren vierten Zeitpunkt wird von den externen Quellen eQ1/2 ein weiterer zweiter Satz von Medieninhalten erzeugt m2-u und bereitgestellt. Der zweite Satz von Medieninhalten m2-u wird an den zweiten Mediaplayer MP2 gesendet und auf dem Speicher des Mediaplayers MP2 gespeichert m2-rs. Die Matrix-Schaltung MS sendet m2-rf den gespeicherten zweiten Satz von Medieninhalten an den Speicher der zweiten der zwei zweiten Ausgabe-Einrichtungen VZ2, und die Ausgabe-Einrichtung VZ2 gibt den zweiten Satz von Medieninhalten aus m2-o, während der erste Satz von Medieninhalten auf der ersten der zwei zweiten Ausgabe-Einrichtungen VZ1 ausgegeben m1-o wird.

Zur Veränderung der Auswahl der auf den Ausgabe-Einrichtungen VZ1, VZ2 auszugebenden Sätze der im Speicher der Mediaplayer MP1, MP2 abgelegten m1-rs, m2-rs Sätze von Medieninhalten erfolgt zu einem fünften Zeitpunkt während der Ausgabe des ersten Satzes von Medieninhalten m1-o durch die Ausgabe-Einrichtung VZ1 sowie der Ausgabe des zweiten Satzes von Medieninhalten m2-o durch die Ausgabe-Einrichtung VZ2 eine Eingabe m1/2-c in das Control-Panel CP, die von der zentralen Steuereinheit SE empfangen und im Speicher der zentralen Steuereinheit SE gespeichert wird.

Die zentrale Steuereinheit SE weist ein Steuerprogramm auf, das ausgeführt wird und die empfangene Eingabe m1/2-c dahingehend auswertet, ob und welcher der im Speicher der Mediaplayer MP1, MP2 abgelegten Sätze von Medieninhalten m1-rs, m2-rs von den Ausgabe-Einrichtungen VZ1, VZ2 ausgegeben werden soll. In diesem Ausführungsbeispiel enthält die Eingabe m2-c eine Anweisung, die Ausgabe der Medieninhalte derart zu wechseln, dass auf der ersten der zwei zweiten Ausgabe-Einrichtungen VZ1 der zweite Satz von Medieninhalten ausgegeben m2-o werden soll, auf der zweiten der zwei zweiten Ausgabe-Einrichtungen VZ2 der erste Satz m1-o von Medieninhalten.

Nach der Auswertung generiert das Steuerprogramm der zentralen Steuereinheit SE ein Signal zur Veränderung der Auswahl der aus dem Mediaplayer MP1 auszugebenden Medieninhalte m1-rs, m2-rs und sendet dieses generierte Signal an die Matrix-Schaltung MS, von der das Signal empfangen und gespeichert wird m1/2-c. Auf der Matrix-Schaltung MS wird ein Programm ausgeführt, das das empfangene Signal m1/2-c auswertet und ein Signal zum Wechseln der auf den Mediaplayern MP1, MP2 gespeicherten m1-rs, m2-rs Sätzen von Medieninhalten generiert m1/2-gc.

Die Matrix-Schaltung MS sendet m2-co zunächst einen entsprechenden Befehl an den ersten Mediaplayer MP1, der von dem ersten Mediaplayer MP1 empfangen, gespeichert und ausgewertet m2-r wird. Der Mediaplayer MP1 generiert m2-s ein Signal, das an die Matrix-Schaltung MS gesendet wird. Die Matrix-Schaltung MS sendet den gespeicherten zweiten Satz von Medieninhalten m2-rf an den Speicher der Ausgabe-Einrichtung VZ1, die Ausgabe m1-o des ersten Satzes von Medieninhalten durch die Ausgabe-Einrichtung VZ1 wird gestoppt und die Ausgabe-Einrichtung VZ1 gibt den zweiten Satz von Medieninhalten aus m2-o.

Zum Wechseln des auf der zweiten der beiden zweiten Ausgabe-Einrichtung VZ2 ausgegebenen m2-o Satzes von Medieninhalten sendet m1-co die Matrix-Schaltung MS einen entsprechenden Befehl an den zweiten Mediaplayer MP2, der von dem zweiten Mediaplayer MP2 empfangen, gespeichert und ausgewertet m1-r wird. Der zweite Mediaplayer MP2 generiert m1-s ein Signal, das an die Matrix-Schaltung MS gesendet wird. Die Matrix-Schaltung MS sendet den gespeicherten ersten Satz von Medieninhalten m1-rf an den Speicher der Ausgabe-Einrichtung VZ2, die Ausgabe m2-o des zweiten Satzes von Medieninhalten durch die Ausgabe-Einrichtung VZ2 wird gestoppt und die Ausgabe-Einrichtung VZ1 gibt den ersten Satz von Medieninhalten aus m1-o.

### BEZUGSZEICHENLISTE

- GMS: Gerichtssaal-Mediensystem
- VE1, VE2, VE3, VE4,: Erste Ausgabeeinrichtung
- VE5 VDM: Master-Ausgabeeinrichtung
- VZ1, VZ2: Zweite Ausgabeeinrichtung
- MSA: Ausgabe-Schnittstelle der Matrix-Schaltung
- MS: Matrix-Schaltung
- MSE: Eingabe-Schnittstelle der Matrix-Schaltung
- MSS: Steuerungseingangsschnittstelle
- SE: Separate Steuereinheit
- SSA: Steuerungsausgangsschnittstelle
- CS: Control-Schnittstelle
- CPS: Ausgabe-Schnittstelle Control-Panel
- CP: Control-Panel
- Q1, Q2, Q3, Q4, Q5: Quelle
- QS: Steuerbare Quelle
- QW: Freie Quelle
- QSA: Quell-Schnittstelle
- RB: Richterbank
- P: Zuschauerbereich
- Z/G: Bereich für Zeugen und Gutachter
- S/K: Bereich für Staatsanwalt/Klage
- A/B: Bereich für Verteidigung
- eQ1/2: Erste / zweite externe Quelle
- MP1, MP2: Mediaplayer
- m1-u, m2-u: Erzeugung eines Satzes von auszugebenden Medieninhalten
- m2-c1: Erzeugung eines Steuersignals der zentralen Steuereinheit
- m2-c2: Empfang und Speicherung eines erzeugten Steuersignals auf einem Mediaplayer
- m1/2-c, m2-c, m2-c3: Empfang und Speicherung eines erzeugten Steuersignals auf der Matrix-Schaltung
- m1/2-gc, m2-gc: Signal zum Wechseln der auf dem Mediaplayer gespeicherten Sätze von Medieninhalten
- m1-co, m2-co: Senden eines Signals zum Wechseln der auf dem Mediaplayer gespeicherten Sätze von Medieninhalten
- m2-r: Empfang eines Signals zum Wechseln der auf dem Mediaplayer gespeicherten Sätze von Medieninhalten
- m2-s: Senden eines Signals zum Wechseln der auf dem Mediaplayer gespeicherten Sätze von Medieninhalten
- m1-rs, m2-rs, m2-s: Empfang und Speicherung eines Satzes von Medieninhalten auf einem Mediaplayer
- m1-rf, m2-rf: Empfang, Speicherung und Senden eines Satzes von Medieninhalten auf der Matrix-Schaltung
- m1-o, m2-o: Ausgeben eines Satzes von Medieninhalten
- m2-i: Erzeugung einer Eingabe im Control-Panel

## Patentansprüche

1. Verfahren zum Wechseln von unterschiedlichen Sätzen von Medieninhalten zur Ausgabe der Medieninhalte auf einer Ausgabe-Einrichtung (VZ1, VZ2) eines Gerichtssaal-Mediensystems (GMS) mit den Verfahrensschritten
• Bereitstellen (m1-u, m2-u) von zwei oder mehr Sätzen von Medieninhalten zur Ausgabe aus einem Mediaplayer (MP1, MP2) und
• Ausführen eines Steuerprogramms auf einer an den Mediaplayer (MP1, MP2) gekoppelten Steuereinheit (SE) zur Steuerung der Ausgabe von Medieninhalten aus dem Mediaplayer (MP1, MP2) auf der Ausgabe-Einrichtung (VZ1, VZ2),
• Ausgeben (m1-o, m2-o) des ersten Satzes von Medieninhalten
wobei das Steuerprogramm automatisch die Ausgabe (m1-o, m2-o) der ausgegebenen Medieninhalte verändert.

2. Verfahren zum Wechseln von unterschiedlichen Sätzen von Medieninhalten zur Ausgabe der Medieninhalte auf einer Ausgabe-Einrichtung (VZ1, VZ2) eines Gerichtssaales nach Anspruch 1,
**dadurch gekennzeichnet, dass**
die zwei oder mehr Sätze von Medieninhalten auf den Mediaplayer (MP1, MP2) übertragen (m1-u, m2-u) werden.

3. Verfahren zum Wechseln von unterschiedlichen Sätzen von Medieninhalten zur Ausgabe der Medieninhalte auf einer Ausgabe-Einrichtung (VZ1, VZ2) eines Gerichtssaales nach Anspruch 2,
**dadurch gekennzeichnet, dass**
zwei oder mehr Sätze von Medieninhalten parallel in einem Speicher des Mediaplayers (MP1, MP2) gespeichert (m1-rs, m2-rs, m1-s, m2-s) werden.

4. Verfahren zum Wechseln von unterschiedlichen Sätzen von Medieninhalten zur Ausgabe der Medieninhalte auf einer Ausgabe-Einrichtung (VZ1, VZ2) eines Gerichtssaales nach Anspruch 3,
**dadurch gekennzeichnet, dass**
nur ein Teil der auf dem Mediaplayer (MP1, MP2) gespeicherten (m1-rs, m2-rs, m1-s, m2-s) Sätze von Medieninhalten auf der Ausgabe-Einrichtung (VZ1, VZ2) ausgegeben (m1-o, m2-o) wird.

5. Verfahren zum Wechseln von unterschiedlichen Sätzen von Medieninhalten zur Ausgabe der Medieninhalte auf einer Ausgabe-Einrichtung (VZ1, VZ2) eines Gerichtssaales nach einem oder mehreren der vorhergehenden Ansprüche,
**dadurch gekennzeichnet, dass**
der auf der Ausgabeeinrichtung (VZ1, VZ2) ausgegebene Satz von Medieninhalten (m1-o, m2-o) aus dem Speicher des Mediaplayers (MP1, MP2) ausgelesen wird.

6. Verfahren zum Wechseln von unterschiedlichen Sätzen von Medieninhalten zur Ausgabe der Medieninhalte auf einer Ausgabe-Einrichtung (VZ1, VZ2) eines Gerichtssaales nach einem oder mehreren der vorhergehenden Ansprüche,
**dadurch gekennzeichnet, dass**
in der Steuereinheit (SE) ein Signal (m1/2-c, m2-c, m2-c1, m2-c2) empfangen wird, das zu einer Veränderung der Auswahl der auszugebenden Sätze von Medieninhalten (m1-u, m2-u) führt.

7. Verfahren zum Wechseln von unterschiedlichen Sätzen von Medieninhalten zur Ausgabe der Medieninhalte auf einer Ausgabe-Einrichtung (VZ1, VZ2) eines Gerichtssaales nach Anspruch 6,
**dadurch gekennzeichnet, dass**
das Steuerprogramm das empfangene Signal (m1/2-c, m2-c, m2-c1, m2-c2) auswertet.

8. Verfahren zum Wechseln von unterschiedlichen Sätzen von Medieninhalten zur Ausgabe der Medieninhalte auf einer Ausgabe-Einrichtung (VZ1, VZ2) eines Gerichtssaales nach einem oder mehreren der vorhergehenden Ansprüche,
**dadurch gekennzeichnet, dass**
die Steuereinheit (SE) ein Signal zur Veränderung der Auswahl der aus dem Mediaplayer (MP1, MP2) auszugebenden Sätze von Medieninhalten (m1-u, m2-u) generiert.

9. Verfahren zum Wechseln von unterschiedlichen Sätzen von Medieninhalten zur Ausgabe der Medieninhalte auf einer Ausgabe-Einrichtung (VZ1, VZ2) eines Gerichtssaales nach Anspruch 8,
**dadurch gekennzeichnet, dass**
das durch die Steuereinheit (SE) generierte Signal (m1/2-c, m2-c, m2-c1, m2-c2) zur Veränderung der Auswahl der aus dem Mediaplayer (MP1, MP2) auszugebenden Sätze von Medieninhalten (m1-u, m2-u) aus einem von der Steuereinheit (SE) empfangenen Signal (m1/2-c, m2-c, m2-c1, m2-c2) generiert wird.

10. Verfahren zum Wechseln von unterschiedlichen Sätzen von Medieninhalten zur Ausgabe der Medieninhalte auf einer Ausgabe-Einrichtung (VZ1, VZ2) eines Gerichtssaales nach Anspruch 8 oder 9,
**dadurch gekennzeichnet, dass**
das durch die Steuereinheit (SE) generierte Signal (m1/2-c, m2-c, m2-c1, m2-c2) zur Veränderung der Auswahl der aus dem Mediaplayer (MP1, MP2) auszugebenden Sätze von Medieninhalten (m1-u, m2-u) an den Mediaplayer (MP1, MP2) gesendet wird.

11. Verfahren zum Wechseln von unterschiedlichen Sätzen von Medieninhalten zur Ausgabe der Medieninhalte auf einer Ausgabe-Einrichtung (VZ1, VZ2) eines Gerichtssaales nach einem oder mehreren der Ansprüche 8 bis 10,
**dadurch gekennzeichnet, dass**
das vom Mediaplayer (MP1, MP2) empfangene Signal (m1/2-c, m2-c, m2-c1, m2-c2) zur Veränderung der Auswahl der aus dem Mediaplayer (MP1, MP2) auszugebenden Sätze von Medieninhalten (m1-u, m2-u) führt.

12. Verfahren zum Wechseln von unterschiedlichen Sätzen von Medieninhalten zur Ausgabe der Medieninhalte auf einer Ausgabe-Einrichtung (VZ1, VZ2) eines Gerichtssaales nach einem oder mehreren der vorhergehenden Ansprüche,
**dadurch gekennzeichnet, dass**
das Steuerprogramm die Ausgabe der auszugebenden Sätze von Medieninhalten (m1-u, m2-u) derart verändert, dass die Ausgabe des ersten Satzes von Medieninhalten (m1-rs) aus dem Speicher des Mediaplayers (MP1, MP2) beendet wird und der zweite Satz von Medieninhalten (m2-rs) aus dem Speicher des Mediaplayers (MP1, MP2) ausgelesen und zur Ausgabe (m1-o, m2-o) auf der Ausgabe-Einrichtung (VZ1, VZ2) gebracht wird.

13. Gerichtssaal-Mediensystem (GMS) mit
• einer Steuereinheit (SE)
• einem mit der Steuereinheit (SE) gekoppelten Mediaplayer (MP1, MP2) und
• einer Die Ausgabe-Einrichtung (VZ1, VZ2)
wobei auf dem Mediaplayer (MP1, MP2) mehrere separate und individuelle Sätze von Medieninhalten speicherbar (m1-rs, m2-rs, m1-s, m2-s) sind und
wobei auf der Steuereinheit (SE) ein Steuerprogramm ausführbar ist, das steuert, welcher der Sätze von Medieninhalten auf der Ausgabe-Einrichtung (VZ1, VZ2) zur Ausgabe gebracht wird.

14. Gerichtssaal-Mediensystem (GMS) nach Anspruch 13
**dadurch gekennzeichnet, dass**
das Gerichtssaal-Mediensystem (GMS) über eine Matrixschaltung (MS) mit einer Vielzahl Quellen (Q1, Q2, Q3, Q4, Q5, QS, QW) und Ausgabe-Einrichtungen (VZ1, VZ2) zur Ausgabe von Bild- und/oder Toninhalten gekoppelt ist.

15. Gerichtssaal-Mediensystem (GMS) nach Anspruch 14
**dadurch gekennzeichnet, dass**
durch die mit dem Mediaplayer (MP1, MP2) gekoppelte Steuereinheit (SE) die Matrixschaltung (MS) mit einer Vielzahl Quellen (Q1, Q2, Q3, Q4, Q5, QS, QW) und Ausgabe-Einrichtungen (VZ1, VZ2) zur Ausgabe von Bild- und/oder Toninhalten steuerbar ist.
